(19) **Europäisches Patentamt / European Patent Office / Office européen des brevets**

(11) **EP 4 749 943 A1**

(12) **EUROPEAN PATENT APPLICATION**
published in accordance with Art. 153(4) EPC

(43) Date of publication:
**27.05.2026   Bulletin 2026/22**

(21) Application number: **24867295.8**

(22) Date of filing: **03.09.2024**

(51) International Patent Classification (IPC):
***H04B 7/0456*** (2017.01)

(52) Cooperative Patent Classification (CPC):
**H04B 7/0413; H04B 7/0456; H04B 7/06; H04L 5/00**

(86) International application number:
**PCT/CN2024/116526**

(87) International publication number:
**WO 2025/060883 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.09.2023   CN 202311205664**

(71) Applicant: **HUAWEI TECHNOLOGIES CO., LTD.
Shenzhen 518129 (CN)**

(72) Inventors:
- **YAN, Mao**
  **Shenzhen, Guangdong 518129 (CN)**
- **CHEN, Lei**
  **Shenzhen, Guangdong 518129 (CN)**
- **LIU, Fengwei**
  **Shenzhen, Guangdong 518129 (CN)**
- **QIU, Jing**
  **Shenzhen, Guangdong 518129 (CN)**

(74) Representative: **Körber, Martin Hans
Mitscherlich PartmbB
Karlstraße 7
80333 München (DE)**

(54) **COMMUNICATION METHOD AND DEVICE**

(57)    This application provides a communication method and a related device, to reduce overheads in a channel measurement process, improving resource utilization and reducing power consumption of a terminal device. In the method, the terminal device receives a first reference signal, where the first reference signal corresponds to a first port set and a second port set, and each port set includes one or more ports. The terminal device sends first channel information and second channel information, where the first channel information is determined based on the first port set corresponding to the first reference signal and the second port set corresponding to the first reference signal, and the second channel information is determined based on the second port set corresponding to the first reference signal.

FIG. 5

**Description**

This application claims priority to Chinese Patent Application No. 202311205664.7, filed with the China National Intellectual Property Administration on September 18, 2023 and entitled "COMMUNICATION METHOD AND DEVICE", which is incorporated herein by reference in its entirety.

**TECHNICAL FIELD**

This application relates to the field of wireless technologies, and in particular, to a communication method and a device.

**BACKGROUND**

As a key technology in wireless communication, a multiple-input multiple-output (multiple-input multiple-output, MIMO) technology can be used to meet a requirement for high-rate transmission. In a channel measurement (or channel estimation) process, a network device may calculate precoding information between the network device and a terminal device by using channel information obtained in the channel measurement process, and subsequently, MIMO communication may be implemented between the network device and the terminal device by using the precoding information.

A downlink channel measurement process implemented by the network device based on a downlink reference signal is used as an example. The downlink reference signal sent by the network device may include a channel state information reference signal (channel state information reference signal, CSI-RS). The network device may receive a feedback for the CSI-RS, so that the network device can obtain channel information based on the feedback for the CSI-RS. The CSI-RS is sent through a port of the network device, that is, overheads of the CSI-RS are related to a number of ports of the network device.

However, in a MIMO system, as a frequency band increases and a requirement for high-rate communication increases, the number of ports of the network device may gradually increase. Consequently, overheads of a reference signal (for example, the CSI-RS) for channel measurement increase, and more transmission resources are occupied, increasing power consumption of the terminal device.

**SUMMARY**

This application provides a communication method and a related device, to reduce overheads in a channel measurement process, improving resource utilization and reducing power consumption of a terminal device.

A first aspect of this application provides a communication method. The method is performed by a terminal device (or a terminal). Alternatively, the method is performed by a part of components (for example, a processor, a chip, or a chip system) in a terminal device. Alternatively, the method may be implemented by a logical module or software that can implement all or a part of functions of a terminal device. In the first aspect and possible implementations of the first aspect, an example in which the communication method is performed by the terminal device is used for description. In the method, the terminal device receives a first reference signal, where the first reference signal corresponds to a first port set and a second port set, and each port set includes one or more ports. The terminal device sends first channel information and second channel information, where the first channel information is determined based on the first port set corresponding to the first reference signal and the second port set corresponding to the first reference signal, and the second channel information is determined based on the second port set corresponding to the first reference signal.

According to the foregoing technical solution, the terminal device may send the first channel information and the second channel information, where the first channel information is determined based on the first port set corresponding to the first reference signal and the second port set corresponding to the first reference signal, and the second channel information is determined based on the second port set corresponding to the first reference signal. After receiving the first channel information and the second channel information, a network device can subsequently obtain, based on the first channel information and the second channel information, precoding information corresponding to the first port set and the second port set. In this way, the terminal device sends low-dimensional channel information (that is, the first channel information and the second channel information), so that the network device can obtain high-dimensional precoding information based on a correlation between channel information of different port sets. This reduces overheads in a channel measurement process, improving resource utilization and reducing power consumption of the terminal device.

It should be noted that, that the first reference signal corresponds to the first port set and the second port set may be understood as that in a plurality of ports used by the network device to send the first reference signal, one part of ports are located in (or included in or belong to) the first port set, and the other part of ports are located in (or included in or belong to) the second port set. In other words, the plurality of ports used by the network device to send the first reference signal may include the port in the first port set and the port in the second port set.

Optionally, the plurality of ports used by the network device to send the first reference signal may not include a port other than the port in the first port set and the port in the second port set. Alternatively, the plurality of ports used by the network device to send the first reference signal may include another port in addition to the port in the first port set and the port in the second port set, and the another port may be included in another port set, for example, a third port set.

In this application, a reference signal received by the terminal device from the network device may be a downlink reference signal. For example, the downlink reference signal may include a CSI-RS, a synchronization signal/physical broadcast channel block (synchronization signal/physical broadcast channel block, SS/PBCH block or SSB). For example, the first reference signal received by the terminal device is a CSI-RS. A port (for example, the port in the first port set, the port in the second port set, and a port that may exist in the third port set) corresponding to the first reference signal may be a CSI-RS port. Correspondingly, channel information (for example, the second channel information) of the CSI-RS port may be a channel state information (channel state information, CSI) report (report). For example, the CSI report may include but is not limited to a precoding matrix indicator (precoding matrix indicator, PMI), a rank indicator (rank indicator, RI), a channel quality indicator (channel quality indicator, CQI), and a layer indicator (layer indicator, LI).

Optionally, the first reference signal may correspond to one or more discrete fourier transform (discrete fourier transform, DFT) beam sets (or inverse discrete fourier transform (Inverse DFT, IDFT) beam sets). In other words, the "port set" may alternatively be the "DFT beam set (or the IDFT beam set)". To be specific, the first reference signal corresponds to a first DFT beam set and a second DFT beam set, and each DFT beam set includes one or more DFT beams (or the first reference signal corresponds to a first IDFT beam set and a second IDFT beam set, and each IDFT beam set includes one or more IDFT beams). In addition, the "DFT beam" may alternatively be another description, for example, a DFT vector, a DFT base, an IDFT vector, or an IDFT base. For example, the first channel information (port-level) is obtained through measurement based on the first reference signal, and then DFT processing is performed in a port dimension, that is, the first channel information is converted into beam-level channel information. Correspondingly, channel information of the first DFT beam set and channel information of the second DFT beam set may be at least one of a corresponding CSI report, a corresponding rank indicator, a corresponding channel quality indicator, a corresponding layer indicator, a corresponding precoding indicator, and the like.

The following mainly uses the port set for description, and a similar manner may be extended to the beam set.

Optionally, in a beam-based communication scenario, the network device may send a plurality of analog beams. For example, the network device includes a transceiver of a hybrid beamforming (hybrid beamforming, HBF) architecture. The network device may select directions of the plurality of analog beams, and deliver, by using different analog beams, reference signals for channel measurement. For the terminal device, a process in which the network device selects the analog beams is referred to as beam training or beam sweeping. In each of the plurality of analog beams, each analog beam may send a reference signal. To be specific, the network device may send the first reference signal by using each of the plurality of analog beams, so that a gain of reducing the overheads can be obtained in channel measurement processes corresponding to the reference signals sent by the plurality of analog beams.

It should be understood that the terminal device may determine, based on the first reference signal corresponding to the first port set and the second port set, channel information corresponding to the first port set and channel information corresponding to the second port set. Then, the terminal device may send the first channel information and the second channel information based on the channel information corresponding to the first port set and the channel information corresponding to the second port set.

Optionally, that the second channel information is determined based on the second port set corresponding to the first reference signal may be understood as that the second channel information includes the channel information of the second port set corresponding to the first reference signal (for example, the second channel information includes a PMI), or the second channel information indicates the channel information of the second port set corresponding to the first reference signal (for example, the second channel information indicates a PMI).

Optionally, that the first channel information is determined based on the first port set corresponding to the first reference signal and the second port set corresponding to the first reference signal may be understood as that the first channel information corresponds to a combination coefficient matrix (or a combination coefficient vector, a combination coefficient, a weighting coefficient, or a coefficient) between the channel information of the first port set and the channel information of the second port set. "Corresponding to" may alternatively be another term, for example, including and indicating.

Further, optionally, when the port corresponding to the first reference signal further includes the port in the third port set, the terminal device may further send a combination coefficient matrix (or a combination coefficient vector, a combination coefficient, a weighting coefficient, or a coefficient) between channel information of the third port set and the channel information of the first port set (or the second port set).

Optionally, in a process in which the terminal device sends the first channel information and the second channel information, the terminal device may send the first channel information and the second channel information, or may send first indication information and second indication information, where the first indication information indicates the first channel information, and the second indication information indicates the second channel information.

Optionally, the first channel information and the second channel information may be carried in a same message/signaling/information or different messages/signaling/information.

Optionally, the first indication information and the second indication information may be carried in a same message/signaling/information or different messages/signaling/information.

In a possible implementation of the first aspect, before the terminal device sends the first channel information and the second channel information, the method further includes: The terminal device sends a second reference signal, where the second reference signal is used to determine third channel information and/or the first port set, and the third channel information is determined based on the first port set corresponding to the second reference signal.

According to the foregoing technical solution, the terminal device may further send the second reference signal. After the network device receives the second reference signal by using one or more port sets (including at least the first port set), the network device can subsequently determine the third channel information and/or the first port set based on the second reference signal. Therefore, the network device can obtain, based on the second reference signal, the channel information corresponding to the first port set.

In a possible implementation of the first aspect, the method further includes: The terminal device receives indication information indicating the first port set and/or the second port set.

According to the foregoing technical solution, the terminal device may further receive the indication information indicating the first port set and/or the second port set, so that the terminal device can determine, based on an indication of the network device, port sets corresponding to the first channel information and the second channel information, and the terminal device and the network device can reach a consistent understanding of the first port set and/or the second port set. Therefore, the network device can obtain accurate precoding information based on the first channel information and the second channel information.

In a possible implementation of the first aspect, before the terminal device sends the first channel information and the second channel information, the method further includes: The terminal device receives a third reference signal, where the third reference signal is used to determine fourth channel information and/or the first port set, and the fourth channel information is determined based on the first port set corresponding to the third reference signal. The terminal device sends the fourth channel information and/or indication information indicating the first port set.

According to the foregoing technical solution, the terminal device may further receive the third reference signal corresponding to the first port set, and the terminal device may determine, based on the third reference signal, and send the fourth channel information and/or the first port set. Therefore, the network device can obtain the channel information corresponding to the first port set. In addition, the network device can determine, based on the information sent by the terminal device, port sets corresponding to the first channel information and the second channel information, and the terminal device and the network device can reach a consistent understanding of the first port set and/or the second port set. Therefore, the network device can obtain accurate precoding information based on the first channel information and the second channel information.

In a possible implementation of the first aspect, the method further includes: The terminal device sends fifth channel information, where the fifth channel information is determined based on the first port set corresponding to the first reference signal.

According to the foregoing technical solution, the terminal device may further send the fifth channel information determined based on the first port set corresponding to the first reference signal. Therefore, the network device can obtain the channel information corresponding to the first port set. In addition, the network device can determine, based on the fifth channel information, port sets corresponding to the first channel information and the second channel information, and the terminal device and the network device can reach a consistent understanding of the first port set and/or the second port set. Therefore, the network device can obtain accurate precoding information based on the first channel information and the second channel information.

In a possible implementation of the first aspect, the method further includes: The terminal device sends an index of the first port set and/or an index of the second port set.

According to the foregoing technical solution, the first channel information sent by the terminal device is determined based on the first port set corresponding to the first reference signal and the second port set corresponding to the first reference signal, and the second channel information sent by the terminal device is determined based on the second port set corresponding to the first reference signal. Correspondingly, the terminal device sends the index of the first port set and/or the index of the second port set, so that the network device can determine the port sets corresponding to the first channel information and the second channel information, and the terminal device and the network device can reach the consistent understanding of the first port set and/or the second port set. Therefore, the network device can obtain accurate precoding information based on the first channel information and the second channel information.

In a possible implementation of the first aspect, the method further includes: The terminal device sends capability information, where the capability information indicates that sending of the first channel information is supported.

According to the foregoing technical solution, the terminal device may further send the capability information indicating that sending of the first channel information is supported, so that the network device can schedule, based on the capability information, the terminal device to feed back the low-dimensional channel information, and then the network device can obtain the high-dimensional precoding information, reducing the overheads in the channel measurement process.

In a possible implementation of the first aspect, the first channel information and the second channel information are used to determine precoding information, and the precoding information satisfies:

$$\mathbf{W} = \boldsymbol{\alpha} \times \begin{bmatrix} \mathbf{W_0} \\ \mathbf{W_1} \end{bmatrix}; \text{ or } \mathbf{W} = \boldsymbol{\alpha} \otimes \begin{bmatrix} \mathbf{W_0} \\ \mathbf{W_1} \end{bmatrix}$$

$\mathbf{W}$ represents the precoding information. $\alpha$ represents the first channel information. $\otimes$ represents a Kronecker product (Kronecker Product). $\mathbf{W_0}$ represents precoding information corresponding to channel information determined based on the first port set. $\mathbf{W_1}$ represents precoding information corresponding to the second channel information.

Optionally, $\mathbf{W_0}$ represents the precoding information corresponding to the channel information determined based on the first port set, and the channel information determined based on the first port set may include at least one of the following:

the third channel information, where the third channel information is determined based on the first port set corresponding to the second reference signal sent by the terminal device (or received by the network device);
the fourth channel information, where the fourth channel information is determined based on the first port set corresponding to the third reference signal received by the terminal device (or sent by the network device); and
the fifth channel information, where the fifth channel information is determined based on the first port set corresponding to the first reference signal.

Optionally, $\alpha$ satisfies:

$$\boldsymbol{\alpha} = [\alpha_0, \alpha_1]^{\mathrm{T}}$$

$\alpha_0$ represents a coefficient of the first port set. $\alpha_1$ represents a coefficient of the second port set. $[\alpha_0, \alpha_1]^{\mathrm{T}}$ represents a transpose of a matrix $[\alpha_0, \alpha_1]$. Correspondingly, the precoding information W satisfies:

$$\mathbf{W} = \begin{bmatrix} \alpha_0 \mathbf{W_0} \\ \alpha_1 \mathbf{W_1} \end{bmatrix}$$

According to the foregoing technical solution, the first channel information and the second channel information that are sent by the terminal device may be used to determine the precoding information, and the precoding information may satisfy the foregoing relational expression, to provide a specific implementation in which the network device determines the precoding information.

Optionally, $\mathbf{W_0}$ and $\mathbf{W_1}$ respectively represent precoding information corresponding to the channel information determined based on the first port set and precoding information corresponding to the second channel information during transmission of a same data stream.

Optionally, $\mathbf{W_0}$ represents precoding information corresponding to the channel information determined based on the first port set during transmission of a first data stream, and $\mathbf{W_1}$ represents precoding information corresponding to the second channel information during transmission of a second data stream.

In a possible implementation of the first aspect, the method further includes: The terminal device receives indication information indicating the first data stream and the second data stream.

According to the foregoing technical solution, the terminal device may further receive the indication information indicating the first data stream and the second data stream, so that the terminal device can correctly receive and demodulate the first data stream and the second data stream based on the indication information. In addition, better system performance can be achieved through pairing of different port sets in different data streams. For example, the first data stream is jointly transmitted by using a strong stream of the first port set and a weak stream of the second port set, and the second data stream is jointly transmitted by using a weak stream of the first port set and a strong stream of the second port set. In this way, good transmission performance is achieved for both data streams, ultimately improving overall performance.

A second aspect of this application provides a communication method. The method is performed by a network device. Alternatively, the method is performed by a part of components (for example, a processor, a chip, or a chip system) in a network device. Alternatively, the method may be implemented by a logical module or software that can implement all or a part of functions of a network device. In the second aspect and possible implementations of the second aspect, an example in which the communication method is performed by the network device is used for description. In the method, the network device sends a first reference signal, where the first reference signal corresponds to a first port set and a second port set, and each port set includes one or more ports. The network device receives first channel information and second channel information, where the first channel information is determined based on the first port set corresponding to the first reference signal and the second port set corresponding to the first reference signal, and the second channel information is determined based on the second port set corresponding to the first reference signal.

According to the foregoing technical solution, after the network device sends the first reference signal, the network device may receive the first channel information and the second channel information, where the first channel information is determined based on the first port set corresponding to the first reference signal and the second port set corresponding to the first reference signal, and the second channel information is determined based on the second port set corresponding to the first reference signal. In other words, after receiving the first channel information and the second channel information, the network device can obtain, based on the first channel information and the second channel information, precoding information corresponding to the first port set and the second port set. In this way, a terminal device sends low-dimensional channel information (that is, the first channel information and the second channel information), so that the network device can obtain high-dimensional precoding information. This reduces overheads in a channel measurement process, improving resource utilization and reducing power consumption of the terminal device.

In a possible implementation of the second aspect, before the network device receives the first channel information and the second channel information, the method further includes: The network device receives a second reference signal, where the second reference signal is used to determine third channel information and/or the first port set, and the third channel information is determined based on the first port set corresponding to the second reference signal.

According to the foregoing technical solution, the network device may further receive, by using one or more port sets (including at least the first port set) the second reference signal corresponding to the first port set. Subsequently, the network device can determine the third channel information and/or the first port set based on the second reference signal. Therefore, the network device can obtain, based on the second reference signal, channel information corresponding to the first port set.

In a possible implementation of the second aspect, the method further includes: The network device sends indication information indicating the first port set and/or the second port set.

According to the foregoing technical solution, the network device may further send the indication information indicating the first port set and/or the second port set, so that the terminal device can determine, based on an indication of the network device, port sets corresponding to the first channel information and the second channel information, and the terminal device and the network device can reach a consistent understanding of the first port set and/or the second port set. Therefore, the network device can obtain accurate precoding information based on the first channel information and the second channel information.

In a possible implementation of the second aspect, before the network device receives the first channel information and the second channel information, the method further includes: The network device sends a third reference signal, where the third reference signal is used to determine fourth channel information and/or the first port set, and the fourth channel information is determined based on the first port set corresponding to the third reference signal. The network device receives the fourth channel information and/or the first port set.

According to the foregoing technical solution, the network device may further send the third reference signal corresponding to the first port set, and the network device may receive the fourth channel information and/or the first port set that are/is determined based on the third reference signal. Therefore, the network device can obtain channel information corresponding to the first port set. In addition, the network device can determine, based on the information sent by the terminal device, port sets corresponding to the first channel information and the second channel information, and the terminal device and the network device can reach a consistent understanding of the first port set and/or the second port set. Therefore, the network device can obtain accurate precoding information based on the first channel information and the second channel information.

In a possible implementation of the second aspect, the method further includes: The network device sends fifth channel information, where the fifth channel information is determined based on the first port set corresponding to the first reference signal.

According to the foregoing technical solution, the network device may further receive the fifth channel information determined based on the first port set corresponding to the first reference signal. Therefore, the network device can obtain channel information corresponding to the first port set. In addition, the network device can determine, based on the fifth channel information, port sets corresponding to the first channel information and the second channel information, and the terminal device and the network device can reach a consistent understanding of the first port set and/or the second port set. Therefore, the network device can obtain accurate precoding information based on the first channel information and the second channel information.

In a possible implementation of the second aspect, the method further includes: The network device receives an index of the first port set and/or an index of the second port set.

According to the foregoing technical solution, the first channel information received by the network device is determined based on the first port set corresponding to the first reference signal and the second port set corresponding to the first reference signal, and the second channel information sent by the terminal device is determined based on the second port set corresponding to the first reference signal. Correspondingly, the terminal device sends the index of the first port set and/or the index of the second port set, so that the network device can determine the port sets corresponding to the first channel information and the second channel information, and the terminal device and the network device can reach the consistent understanding of the first port set and/or the second port set. Therefore, the network device can obtain accurate precoding information based on the first channel information and the second channel information.

In a possible implementation of the second aspect, the method further includes: The network device receives capability information, where the capability information indicates that sending of the first channel information is supported.

According to the foregoing technical solution, the network device may further receive the capability information indicating that sending of the first channel information is supported, so that the network device can schedule, based on the capability information, the terminal device to feed back the low-dimensional channel information, and then the network device can obtain the high-dimensional precoding information based on a correlation between channel information of different port sets, reducing the overheads in the channel measurement process.

In a possible implementation of the second aspect, the first channel information and the second channel information are used to determine precoding information, and the precoding information satisfies:

$$\mathbf{W} = \boldsymbol{\alpha} \times \begin{bmatrix} \mathbf{W_0} \\ \mathbf{W_1} \end{bmatrix}; \text{ or } \mathbf{W} = \boldsymbol{\alpha} \otimes \begin{bmatrix} \mathbf{W_0} \\ \mathbf{W_1} \end{bmatrix}$$

$\mathbf{W}$ represents the precoding information. $\alpha$ represents the first channel information. $\otimes$ represents a Kronecker product. $\mathbf{W_0}$ represents precoding information corresponding to channel information determined based on the first port set. $\mathbf{W_1}$ represents precoding information corresponding to the second channel information.

Optionally, $\mathbf{W_0}$ represents the precoding information corresponding to the channel information determined based on the first port set, and the channel information determined based on the first port set may include at least one of the following:

the third channel information, where the third channel information is determined based on the first port set corresponding to the second reference signal sent by the terminal device (or received by the network device);
the fourth channel information, where the fourth channel information is determined based on the first port set corresponding to the third reference signal received by the terminal device (or sent by the network device); and
the fifth channel information, where the fifth channel information is determined based on the first port set corresponding to the first reference signal.

Optionally, $\alpha$ satisfies:

$$\boldsymbol{\alpha} = [\alpha_0, \alpha_1]^{\mathrm{T}}$$

$\alpha_0$ represents a coefficient of the first port set. $\alpha_1$ represents a coefficient of the second port set. $[\alpha_0, \alpha_1]^{\mathrm{T}}$ represents a transpose of a matrix $[\alpha_0, \alpha_1]$. Correspondingly, the precoding information W satisfies:

$$\mathbf{W} = \begin{bmatrix} \alpha_0 \mathbf{W_0} \\ \alpha_1 \mathbf{W_1} \end{bmatrix}$$

According to the foregoing technical solution, the first channel information and the second channel information that are received by the network device may be used to determine the precoding information, and the precoding information may satisfy the foregoing relational expression, to provide a specific implementation in which the network device determines the precoding information.

Optionally, $\mathbf{W_0}$ **and** $\mathbf{W_1}$ respectively represent precoding information corresponding to the channel information determined based on the first port set and precoding information corresponding to the second channel information during transmission of a same data stream. Therefore, the precoding information can be adapted to a single-stream transmission scenario.

Optionally, $\mathbf{W_0}$ represents precoding information corresponding to the channel information determined based on the first port set during transmission of a first data stream, and $\mathbf{W_1}$ represents precoding information corresponding to the second channel information during transmission of a second data stream. Therefore, the precoding information can be adapted to a multi-stream transmission scenario.

In a possible implementation of the second aspect, the method further includes: The network device sends indication information indicating the first data stream and the second data stream.

According to the foregoing technical solution, the network device may further send the indication information indicating the first data stream and the second data stream, so that the terminal device can correctly receive and demodulate the first data stream and the second data stream based on the indication information. In addition, better system performance can be achieved through pairing of different port sets in different data streams. For example, the first data stream is jointly transmitted by using a strong stream of the first port set and a weak stream of the second port set, and the second data stream is jointly transmitted by using a weak stream of the first port set and a strong stream of the second port set. In this way, good transmission performance is achieved for both data streams, ultimately improving overall performance.

A third aspect of this application provides a communication apparatus. The apparatus may implement the method in any one of the first aspect and the implementations of the first aspect. The apparatus includes a corresponding unit or module configured to perform the foregoing method. The unit or module included in the apparatus can be implemented by software and/or hardware. For example, the apparatus may be a terminal device. Alternatively, the apparatus may be a component (for example, a processor, a chip, or a chip system) in a terminal device. Alternatively, the apparatus may be a logical module or software that can implement all or a part of functions of a terminal device. The apparatus includes a processing unit and a transceiver unit. The transceiver unit is configured to receive a first reference signal, where the first reference signal corresponds to a first port set and a second port set, and each port set includes one or more ports. The processing unit is configured to determine first channel information and second channel information, and the transceiver unit is further configured to send the first channel information and the second channel information, where the first channel information is determined based on the first port set corresponding to the first reference signal and the second port set corresponding to the first reference signal, and the second channel information is determined based on the second port set corresponding to the first reference signal.

In a possible implementation of the third aspect, the transceiver unit is further configured to send a second reference signal, where the second reference signal is used to determine third channel information and/or the first port set, and the third channel information is determined based on the first port set corresponding to the second reference signal.

In a possible implementation of the third aspect, the transceiver unit is further configured to receive indication information indicating the first port set and/or the second port set.

In a possible implementation of the third aspect, the transceiver unit is further configured to receive a third reference signal, where the third reference signal is used to determine fourth channel information and/or the first port set, and the fourth channel information is determined based on the first port set corresponding to the third reference signal. The transceiver unit is further configured to send the fourth channel information and/or indication information indicating the first port set.

In a possible implementation of the third aspect, the transceiver unit is further configured to send fifth channel information, where the fifth channel information is determined based on the first port set corresponding to the first reference signal.

In a possible implementation of the third aspect, the first channel information corresponds to a combination coefficient matrix, a combination coefficient vector, or a combination coefficient (or a weighting coefficient or a coefficient) between channel information of the first port set and channel information of the second port set.

In a possible implementation of the third aspect, the transceiver unit is further configured to send an index of the first port set and/or an index of the second port set.

In a possible implementation of the third aspect, the transceiver unit is further configured to send capability information, where the capability information indicates that sending of the first channel information is supported.

In a possible implementation of the third aspect, the first channel information and the second channel information are used to determine precoding information, and the precoding information satisfies:

$$\mathbf{W} = \alpha \times \begin{bmatrix} \mathbf{W_0} \\ \mathbf{W_1} \end{bmatrix}; \text{ or } \mathbf{W} = \alpha \otimes \begin{bmatrix} \mathbf{W_0} \\ \mathbf{W_1} \end{bmatrix}$$

$\mathbf{W}$ represents the precoding information. $\alpha$ represents the first channel information. $\otimes$ represents a Kronecker product (Kronecker Product). $\mathbf{W_0}$ represents precoding information corresponding to channel information (for example, one or more of the third channel information, the fourth channel information, and the fifth channel information) determined based on the first port set. $\mathbf{W_1}$ represents precoding information corresponding to the second channel information.

Optionally, $\alpha$ satisfies:

$$\boldsymbol{\alpha} = [\alpha_0, \alpha_1]^{\mathrm{T}}$$

$\alpha_0$ represents a coefficient of the first port set. $\alpha_1$ represents a coefficient of the second port set. $[\alpha_0, \alpha_1]^{\mathrm{T}}$ represents a transpose of a matrix $[\alpha_0, \alpha_1]$.

In a possible implementation of the third aspect, $\mathbf{W_0}$ and $\mathbf{W_1}$ respectively represent precoding information corresponding to the channel information determined based on the first port set and precoding information corresponding to the second channel information during transmission of a same data stream.

In a possible implementation of the third aspect, $\mathbf{W_0}$ represents precoding information corresponding to the channel information determined based on the first port set during transmission of a first data stream, and $\mathbf{W_1}$ represents precoding information corresponding to the second channel information during transmission of a second data stream.

In a possible implementation of the third aspect, the transceiver unit is further configured to receive indication information indicating the first data stream and the second data stream.

In the third aspect of this application, the component modules of the communication apparatus may be further configured to: perform the steps performed in the possible implementations of the first aspect, and achieve corresponding technical effects. For details, refer to the first aspect. Details are not described herein again.

A fourth aspect of this application provides a communication apparatus. The apparatus may implement the method in any one of the second aspect and the implementations of the second aspect. The apparatus includes a corresponding unit or module configured to perform the foregoing method. The unit or module included in the apparatus can be implemented by software and/or hardware. For example, the apparatus may be a network device. Alternatively, the apparatus may be a component (for example, a processor, a chip, or a chip system) in a network device. Alternatively, the apparatus may be a logical module or software that can implement all or a part of functions of a network device. The apparatus includes a processing unit and a transceiver unit. The processing unit is configured to determine a first reference signal, and the transceiver unit is configured to send the first reference signal, where the first reference signal corresponds to a first port set and a second port set, and each port set includes one or more ports. The transceiver unit is further configured to receive first channel information and second channel information, where the first channel information is determined based on the first port set corresponding to the first reference signal and the second port set corresponding to the first reference signal, and the second channel information is determined based on the second port set corresponding to the first reference signal.

In a possible implementation of the fourth aspect, the transceiver unit is further configured to receive a second reference signal, where the second reference signal is used to determine third channel information and/or the first port set, and the third channel information is determined based on the first port set corresponding to the second reference signal.

In a possible implementation of the fourth aspect, the transceiver unit is further configured to send indication information indicating the first port set and/or the second port set.

In a possible implementation of the fourth aspect, the transceiver unit is further configured to send a third reference signal, where the third reference signal is used to determine fourth channel information and/or the first port set, and the fourth channel information is determined based on the first port set corresponding to the third reference signal. The network device receives the fourth channel information and/or the first port set.

In a possible implementation of the fourth aspect, the transceiver unit is further configured to send fifth channel information, where the fifth channel information is determined based on the first port set corresponding to the first reference signal.

In a possible implementation of the fourth aspect, the first channel information corresponds to a combination coefficient matrix, a combination coefficient vector, or a combination coefficient (or a weighting coefficient or a coefficient) between channel information of the first port set and channel information of the second port set.

In a possible implementation of the fourth aspect, the transceiver unit is further configured to receive an index of the first port set and/or an index of the second port set.

In a possible implementation of the fourth aspect, the transceiver unit is further configured to receive capability information, where the capability information indicates that sending of the first channel information is supported.

In a possible implementation of the fourth aspect, the first channel information and the second channel information are used to determine precoding information, and the precoding information satisfies:

$$\mathbf{W} = \boldsymbol{\alpha} \times \begin{bmatrix} \mathbf{W_0} \\ \mathbf{W_1} \end{bmatrix}; \text{ or } \mathbf{W} = \boldsymbol{\alpha} \otimes \begin{bmatrix} \mathbf{W_0} \\ \mathbf{W_1} \end{bmatrix}$$

$\mathbf{W}$ represents the precoding information. $\boldsymbol{\alpha}$ represents the first channel information. $\otimes$ represents a Kronecker product (Kronecker Product). $\mathbf{W_0}$ represents precoding information corresponding to channel information determined based on the first port set. $\mathbf{W_1}$ represents the second channel information.

Optionally, $\boldsymbol{\alpha}$ satisfies:

$$\mathbf{\alpha} = [\alpha_0, \alpha_1]^{\mathrm{T}}$$

$\alpha_0$ represents a coefficient of the first port set. $\alpha_1$ represents a coefficient of the second port set. $[\alpha_0, \alpha_1]^{\mathrm{T}}$ represents a transpose of a matrix $[\alpha_0, \alpha_1]$.

In a possible implementation of the fourth aspect, $\mathbf{W_0}$ and $\mathbf{W_1}$ respectively represent precoding information corresponding to the channel information determined based on the first port set and precoding information corresponding to the second channel information during transmission of a same data stream.

In a possible implementation of the fourth aspect, $\mathbf{W_0}$ represents precoding information corresponding to the channel information determined based on the first port set during transmission of a first data stream, and $\mathbf{W_1}$ represents precoding information corresponding to the second channel information during transmission of a second data stream.

In a possible implementation of the fourth aspect, the transceiver unit is further configured to send indication information indicating the first data stream and the second data stream.

In the fourth aspect of this application, the component modules of the communication apparatus may be further configured to: perform the steps performed in the possible implementations of the second aspect, and achieve corresponding technical effects. For details, refer to the second aspect. Details are not described herein again.

A fifth aspect of this application provides a communication apparatus, including at least one processor. The at least one processor is coupled to a memory. The processor is configured to perform the method according to any one of the first aspect or the possible implementations of the first aspect. For example, the memory is configured to store a program or instructions. The at least one processor is configured to execute the program or the instructions, so that the apparatus implements the method according to any one of the first aspect or the possible implementations of the first aspect.

A sixth aspect of this application provides a communication apparatus, including at least one processor. The at least one processor is coupled to a memory. The processor is configured to perform the method according to any one of the second aspect or the possible implementations of the second aspect. For example, the memory is configured to store a program or instructions. The at least one processor is configured to execute the program or the instructions, so that the apparatus implements the method according to any one of the second aspect or the possible implementations of the second aspect.

A seventh aspect of this application provides a communication apparatus, including at least one logic circuit and an input/output interface. The logic circuit is configured to perform the method according to any one of the first aspect or the possible implementations of the first aspect.

An eighth aspect of this application provides a communication apparatus, including at least one logic circuit and an input/output interface. The logic circuit is configured to perform the method according to any one of the second aspect or the possible implementations of the second aspect.

A ninth aspect of this application provides a computer-readable storage medium. The computer-readable storage medium is configured to store one or more computer-executable instructions. When the computer-executable instructions are executed by a processor, the processor performs the method according to any one of the possible implementations of either of the first aspect and the second aspect.

A tenth aspect of this application provides a computer program product (or referred to as a computer program). When the computer program product is executed by a processor, the processor performs the method according to any one of the possible implementations of either of the first aspect and the second aspect.

An eleventh aspect of this application provides a chip system. The chip system includes at least one processor, configured to support a communication apparatus in implementing a function in any one of the possible implementations of either of the first aspect and the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A twelfth aspect of this application provides a communication system. The communication system includes the communication apparatus according to the third aspect and the communication apparatus according to the fourth aspect. Alternatively, the communication system includes the communication apparatus according to the fifth aspect and the communication apparatus according to the sixth aspect. Alternatively, the communication system includes the communication apparatus according to the seventh aspect and the communication apparatus according to the eighth aspect.

For technical effects of any design manner in the third aspect to the twelfth aspect, refer to the technical effects of the first aspect, the second aspect, and different designs of the first aspect and the second aspect. Details are not described herein again.

**BRIEF DESCRIPTION OF DRAWINGS**

FIG. 1a is a diagram of a signal transmission mode according to this application;
FIG. 1b is another diagram of a signal transmission mode according to this application;
FIG. 1c is another diagram of a signal transmission mode according to this application;
FIG. 2 is a diagram of a communication system according to this application;
FIG. 3 is a diagram of a reference signal receiving and sending process according to this application;
FIG. 4 is another diagram of a reference signal receiving and sending process according to this application;
FIG. 5 is a diagram of a communication method according to this application;
FIG. 6a is another diagram of a communication method according to this application;
FIG. 6b is another diagram of a communication method according to this application;
FIG. 6c is another diagram of a communication method according to this application;
FIG. 7a is a diagram of an application example of a communication method according to this application;
FIG. 7b is another diagram of an application example of a communication method according to this application;
FIG. 8 is another diagram of a reference signal receiving and sending process according to this application;
FIG. 9 is another diagram of a communication method according to this application;
FIG. 10 is a diagram of a communication apparatus according to this application;
FIG. 11 is another diagram of a communication apparatus according to this application;
FIG. 12 is another diagram of a communication apparatus according to this application; and
FIG. 13 is another diagram of a communication apparatus according to this application.

**DESCRIPTION OF EMBODIMENTS**

First, some terms in embodiments of this application are described for ease of understanding by a person skilled in the art.

(1) Configuration and preconfiguration: In this application, both configuration and preconfiguration are used. Configuration means that a network device such as a base station or a server sends configuration information of some parameters or values of parameters to a terminal by using a message or signaling, so that the terminal determines a communication parameter or a transmission resource based on the values or the information. Similar to configuration, preconfiguration may be a manner in which a network device such as a base station or a server sends parameter information or values to a terminal by using a communication link or a carrier, or may be a manner of defining a corresponding parameter or parameter value in a standard, or a manner of setting a related parameter or value in a terminal device in advance. This is not limited in this application. Further, these values and parameters may be changed or updated.
(2) In this application, "indicating" may include direct indicating and indirect indicating. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only one part of the to-be-indicated information is indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.
The to-be-indicated information may be sent as a whole, or may be divided into a plurality of pieces of sub-information for separate sending. In addition, sending periodicities and/or sending occasions of these pieces of sub-information may be the same or different. A specific sending method is not limited in this application. The sending periodicities and/or the sending occasions of these pieces of sub-information may be predefined, for example, predefined according to the protocol, or may be configured by a transmit-side device by sending configuration information to a receive-side device. The configuration information may include, for example but not limited to, one or a combination of at least two of radio resource control (radio resource control, RRC) signaling, medium access control (medium access control, MAC) layer signaling, and physical layer signaling. The MAC layer signaling includes, for example, a MAC control element (control element, CE), and the physical layer signaling includes, for example, downlink control information (downlink control information, DCI).

(3) Reference signal (reference signal, RS): is also referred to as a pilot signal. In a communication system, to send and receive data, obtain system synchronization, and feed back channel information, an uplink channel or a downlink channel needs to be estimated. Channel estimation is a process of reconstructing or restoring a received signal to compensate for signal distortion caused by channel fading and fading caused by noise, where changes of the channel in time domain and frequency domain are tracked by using a standard signal predicted by a transmitter machine and a receiver machine. The standard signal is also referred to as a reference signal, is distributed on different resource elements (resource elements, REs) in time-frequency two-dimensional space in an orthogonal frequency division multiplexing (orthogonal frequency division multiplexing, OFDM) symbol, and has a known amplitude and phase.

At a physical layer, uplink communication may include transmission of an uplink physical channel and an uplink signal. The uplink physical channel includes a random access channel (random access channel, PRACH), an uplink control channel (physical uplink control channel, PUCCH), an uplink data channel (physical uplink shared channel, PUSCH), and the like. The uplink signal includes a channel sounding signal SRS, an uplink control channel demodulation reference signal (PUCCH demodulation reference signal, PUCCH-DMRS), an uplink data channel demodulation reference signal PUSCH-DMRS, an uplink phase noise tracking signal (phase noise tracking reference signal, PTRS), an uplink positioning signal (uplink positioning RS), and the like.

At the physical layer, downlink communication may include transmission of a downlink physical channel and a downlink signal. The downlink physical channel includes a broadcast channel (physical broadcast channel, PBCH), a downlink control channel (physical downlink control channel, PDCCH), a downlink data channel (physical downlink shared channel, PDSCH), and the like. The downlink signal includes a primary synchronization signal (primary synchronization signal, PSS for short)/secondary synchronization signal (secondary synchronization signal, SSS), a downlink control channel demodulation reference signal PDCCH-DMRS, a downlink data channel demodulation reference signal PDSCH-DMRS, a phase noise tracking signal PTRS, a channel state information reference signal (channel state information reference signal, CSI-RS), a cell signal (Cell reference signal, CRS) (not available in NR), a fine synchronization signal (time/frequency tracking reference signal, TRS) (not available in LTE), an LTE/NR positioning signal (positioning RS), and the like.

(4) Terms "system" and "network" in embodiments of this application may be used interchangeably. "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(5) "Sending" and "receiving" in embodiments of this application represent signal transmission directions. For example, "sending information to a device X" may be understood as that a destination end of the information is the device X, and may include direct sending through an air interface, or indirect sending by another unit or module through an air interface. "Receiving information from a device Y" may be understood as that a source end of the information is the device Y, and may include direct receiving from the device Y through an air interface, or indirect receiving from the device Y from another unit or module through an air interface. "Sending" may alternatively be understood as "outputting" of a chip interface, and "receiving" may alternatively be understood as "inputting" of the chip interface.

For example, a communication process between an entity A and an entity B is used as an example. In this application, that the entity A sends information to the entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives, via the another entity, the information sent by the entity A. The entity A and the entity B herein each may be a RAN node or a terminal, or may be a module inside a RAN node or a terminal. Information sending and receiving may be information exchange between a RAN node and a terminal, for example, information exchange between a base station and a terminal. Alternatively, information sending and receiving may be information exchange between two RAN nodes, for example, information exchange between a CU and a DU. Alternatively, information sending and receiving may be information exchange between different modules inside an apparatus, for example, information exchange between a chip of a terminal and another module of the terminal, or information exchange between a chip of a base station and another module of the base station.

(6) Precoding technology: When a channel status is known, a transmit side may process a to-be-sent signal by using a precoding matrix that matches a channel, and then send the to-be-sent signal, so that a precoded sent signal adapts to the channel. Therefore, in comparison with a processing process in which a receive side receives a non-precoded sent signal and eliminates inter-channel impact, a processing process in which the receive side receives the precoded sent signal and eliminates inter-channel impact is less complicated. Therefore, precoding the to-be-sent signal improves received signal quality (for example, a signal to interference plus noise ratio (signal to interference plus noise ratio, SINR)). Transmission between the transmit side and a plurality of receive sides can be further performed on a same time-frequency resource by using the precoding technology. That is, multi-user multiple-input multiple-output (multi-user multiple-input multiple-output, MU-MIMO) is implemented.

Optionally, the transmit side may be a network device, and the receive side may be a terminal device. Alternatively, the transmit side may be a terminal device, and the receive side may be a terminal device.

In an implementation, a multiple-input multiple-output (Multiple-Input Multiple-Output, MIMO) technology is used to increase a system capacity and improve a throughput. A mathematical expression is $y = Hx + n$, where $y$ is a received signal, $H$ is channel information of a MIMO channel, $x$ is a sent signal, and $n$ is noise. In a communication system with a plurality of antennas, signals of a plurality of transmit antennas are superimposed on any receive antenna. Therefore, a method for sending a signal by a transmit side affects system performance, and it is usually complex to restore the sent signal at a receive side. In this context, precoding (Precoding) is used to reduce system overheads and maximize a MIMO system capacity on the one hand, and to reduce complexity of a receiver machine in eliminating inter-channel interference on the other hand. In this case, the mathematical expression is $y = HPx + n$, where $P$ is a precoding matrix (or vector). To reduce implementation complexity, $P$ may be selected from a predefined matrix (or vector) set, where the set is referred to as a codebook (Codebook). This method is also referred to as a codebook based sending method. If the transmit side can know all information about $H$, $P$ may be obtained by the transmit side. This method is also referred to as a non-codebook (Non-codebook, NCB) based sending method.

It should be understood that related descriptions of the precoding technology are merely an example for ease of understanding, and are not intended to limit the protection scope of embodiments of this application. In a specific implementation process, the transmit side may alternatively perform precoding in another manner. For example, when channel information (for example, but not limited to, a channel matrix) cannot be obtained, precoding is performed by using a preset precoding matrix or in a weighted processing manner. For brevity, specific content thereof is not described in this specification.

(7) Precoding matrix indicator (PMI): may indicate a precoding matrix. The precoding matrix may be, for example, a precoding matrix determined by a terminal device based on a channel matrix of one frequency domain unit. The channel matrix may be determined by the terminal device through channel estimation or in another manner or based on channel reciprocity. However, it should be understood that a specific method for determining the precoding matrix by the terminal device is not limited to the foregoing descriptions. For specific implementations, refer to the conventional technology. For brevity, the implementations are not enumerated herein.

For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on a covariance matrix of the channel matrix. It should be understood that the foregoing listed manners of determining the precoding matrix are merely examples, and should not constitute any limitation on this application.

It should be noted that according to a method provided in embodiments of this application, a network device may determine, based on feedback of the terminal device, a CSI-RS port, a frequency domain DFT vector, and a combination coefficient of a spatial-frequency vector that are used to construct a precoding vector, and further determine a precoding matrix corresponding to each frequency domain unit. The precoding matrix may be directly used for downlink data transmission. Alternatively, some beamforming methods, including, for example, zero forcing (zero forcing, ZF), regularized zero-forcing (regularized zero-forcing, RZF), a minimum mean-square error (minimum mean-square error, MMSE), and a maximum signal-to-leakage-and-noise ratio (signal-to-leakage-and-noise, SLNR), may be performed to obtain a precoding matrix finally for downlink data transmission. This is not limited in this application. Unless specifically described, all precoding matrices below may be precoding matrices determined according to the method provided in this application.

It may be understood that the precoding matrix determined by the terminal device may be understood as a to-be-fed-back precoding matrix. The terminal device may indicate the to-be-fed-back precoding matrix by using the PMI, so that the network device restores the precoding matrix based on the PMI. It may be understood that the precoding matrix restored by the network device based on the PMI may be the same as or similar to the to-be-fed-back precoding matrix.

In downlink channel measurement, higher approximation between the precoding matrix determined by the network device based on the PMI and the precoding matrix determined by the terminal device indicates that the precoding matrix determined by the network device for data transmission is more adaptable to a channel status. Therefore, signal received quality can be improved.

(8) Antenna port: may be referred to as a port for short. It may be understood as a transmit antenna identified by a receive side or a transmit antenna that can be spatially distinguished. One antenna port may be preconfigured for each virtual antenna, each virtual antenna may be a weighted combination of a plurality of physical antennas, and each antenna port may correspond to one reference signal. Therefore, each antenna port may be referred to as a reference signal port, for example, a CSI-RS port, a demodulation reference signal (demodulation reference signal, DMRS), or an SRS port.

The antenna port is a logical concept, and generally, there is no direct correspondence between an antenna port and a physical antenna. The antenna port is usually associated with a reference signal, and the antenna port may be understood as a transceiver interface on a channel through which the reference signal passes. For a low frequency, one antenna port may correspond to one or more antenna array elements. These array elements jointly send a reference signal. The receive side may consider the array elements as a whole, and does not need to distinguish between the array elements. For a high-frequency system, the antenna port may correspond to one beam. Similarly, the receive side only needs to consider the beam as an interface, and does not need to distinguish between array elements.

In addition, a port group may be a set corresponding to a plurality of antenna ports. In a manner, a plurality of digital ports of a network device are grouped to form a plurality of port groups. In another manner (especially in a hybrid digital analog beam architecture), the port group may be a plurality of digital ports corresponding to a same analog beam, also referred to as a port group or a digital-analog port group for short. Alternatively, the port group may be a digital port set corresponding to a plurality of analog beams, also referred to as a port group or a digital-analog port group for short. Alternatively, a plurality of digital ports of a same analog beam are grouped into a plurality of subsets, and each subset is referred to as a port group or a digital-analog port group.

(9) Channel state information (CSI) report (report): is information that is reported by a receive side (for example, a terminal device) to a transmit side (for example, a network device) in a wireless communication system and that is used to describe a channel attribute of a communication link. The CSI report may include, for example but not limited to, a precoding matrix indicator (PMI), a rank indicator (RI), a channel quality indicator (CQI), a channel state information reference signal (channel state information reference signal, CSI-RS), a CSI-RS resource indicator (CSI-RS resource indicator, CRI), and a layer indicator (layer indicator, LI). It should be understood that the foregoing listed specific content of the CSI is merely an example for description, and should not constitute any limitation on this application. The CSI may include one or more of the foregoing listed content, or may include other information that is different from the foregoing listed content and that represents CSI. This is not limited in this application.

(10) Beam: A beam (beam) and a beam pair (beam pair link, BPL) are introduced into a communication system. The beam is a communication resource. Beams may be classified into transmit beams and receive beams. A technology for forming the beam may be a beamforming technology or another technical means. Beamforming includes transmit beamforming and receive beamforming.

The beam is a communication resource. The beam may be a wide beam, a narrow beam, or another type of beam. The technology for forming the beam may be the beamforming technology or the another technical means. The beamforming technology may be specifically a digital beamforming technology, an analog beamforming technology, or a hybrid digital/analog beamforming technology. Different beams may be considered as different resources. Same information or different information may be sent by using different beams. Optionally, a plurality of beams having a same feature or similar communication features may be considered as one beam. One beam may include one or more antenna ports, configured to transmit a data channel, a control channel, a sounding signal, and the like. For example, the transmit beam may be distribution of signal strength formed in different directions in space after a signal is transmitted via an antenna, and the receive beam may be distribution of signal strength, in different directions in space, of a radio signal received from an antenna. It may be understood that one or more antenna ports forming one beam may also be considered as one antenna port set. In a protocol, the beam may also be embodied as a spatial filter (spatial filter).

Transmit beam: is a beam that has spatial directivity and that is formed by a signal sent by a transmit-side device by using a specific beamforming weight. In an uplink direction, the transmit-side device may be a terminal. In a downlink direction, the transmit-side device may be a network device.

Receive beam: is a beam that has spatial directivity and that is formed by a signal received by a receive-side device by using a specific beamforming weight. In an uplink direction, the receive-side device may be a network device. In a downlink direction, the receive-side device may be a terminal.

Transmit beamforming: When the transmit-side device with an antenna array sends a signal, a specific amplitude and phase are set on each antenna element of the antenna array, so that the sent signal has specific spatial directivity, that is, the signal has high signal power in some directions, and has low signal power in some other directions, where a direction in which the signal power is the highest is a direction of the transmit beam. The antenna array includes a plurality of antenna elements. The additional specific amplitude and phase are a beamforming weight.

Receive beamforming: When the receive-side device with an antenna array receives a signal, a specific amplitude and phase are set on each antenna element of the antenna array, so that a power gain of the received signal is directional, that is, the power gain is high when the signal is received in some directions, and the power gain is low when the signal is received in some other directions, where a direction in which the power gain is the highest when the signal is received is a direction of the receive beam. The antenna array includes a plurality of antenna elements. The additional specific amplitude and phase are a beamforming weight.

Optionally, sending a signal by using a transmit beam may be understood as sending the signal by using a beamforming weight.

Optionally, receiving a signal by using a receive beam may be understood as receiving the signal by using a beamforming weight.

Generally, different beams may be considered as different resources. Same information or different information may be sent by using (or through) different beams. The beam pair is established based on the concept of the beam. One beam pair usually includes one transmit beam of a transmit-side device and one receive beam of a receive-side device.

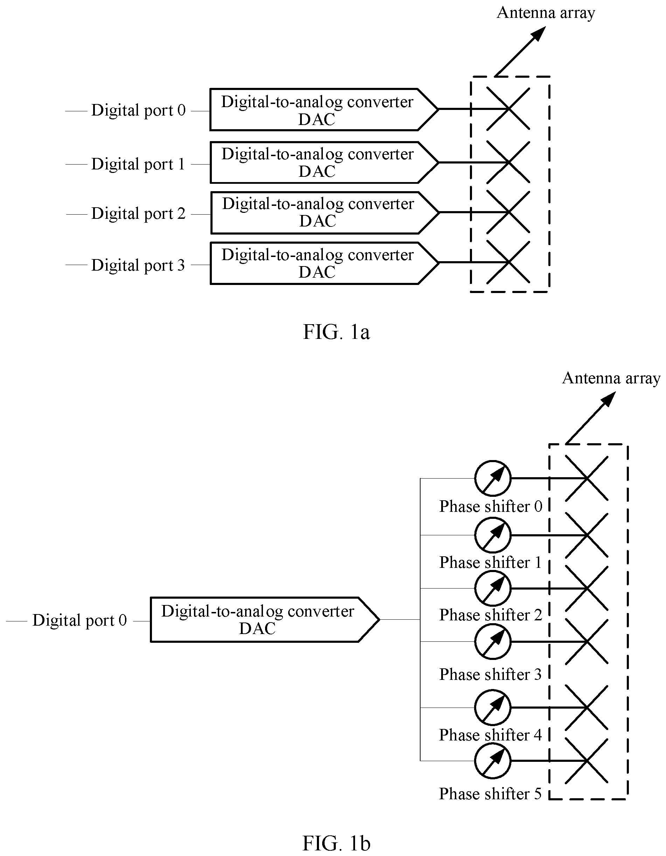

An example in which a network device is a base station is used below to describe a beam implementation process with reference to implementation content shown in FIG. 1a to FIG. 1c. In a communication system of a high frequency band, the base station (and terminals of a part of frequency bands) usually uses a large-scale array antenna (for example, 500 to more than 1000 antenna elements), and a high array gain is used to resist a path loss caused by an increase of the frequency band, to improve a coverage capability. From the perspective of an implementation of the base station, for the same large array, array weighting manners (that is, different beamforming manners) for different frequency bands and different array scales are roughly classified into the following three types according to beamforming implementation solutions.

An implementation is digital beamforming (digital beamforming, DBF), and a basic structure of digital beamforming is shown in FIG. 1a. Each antenna unit or each group of antenna units is directly connected to one digital channel. This structure is a typical low-band massive multiple-input multiple-output (massive MIMO) structure. Each antenna signal is directly converted to digital domain, and subsequent array weighting is performed in digital domain. Therefore, this is referred to as digital beamforming. Digital domain signal processing has the highest degree of freedom and supports a complex signal processing manner. Therefore, the DBF architecture has the best performance under the same array scale. On the other hand, power consumption and costs of a digital-to-analog converter (digital-to-analog converter, DAC)/analog-to-digital converter (analog-to-digital converter, ADC) are high (especially in a case of a large bandwidth). Generally, DBF costs are the highest in the same array scale.

Another implementation is analog beamforming (analog beamforming, ABF), and a structure of analog beamforming is shown in FIG. 1b. Each antenna unit or each group of antenna units is connected to one analog phase shifter, and then a plurality of antenna units are combined in analog domain and then pass through one digital-to-analog/analog-to-digital converter. Compared with DBF, the entire ABF array corresponds to only one digital-to-analog/analog-to-digital converter. Therefore, the ABF architecture has the greatest advantage of low costs and power consumption. A bottleneck of ABF is also evident. A setting of the phase shifter in analog domain determines a beam direction after beamforming. Because electrical signals are directly combined in analog domain, and cannot be weighted through digital signal processing like in DBF, ABF needs to preconfigure the setting of the phase shifter (that is, steer an analog beam toward a target terminal) during receiving and sending. This process needs to be completed through beam sweeping in a link establishment phase, causing an extra delay. Generally, once the analog beam is blocked or moved, causing misalignment, system link quality is rapidly reduced, or even a link is interrupted. Therefore, communication reliability of ABF is not as good as that of DBF.

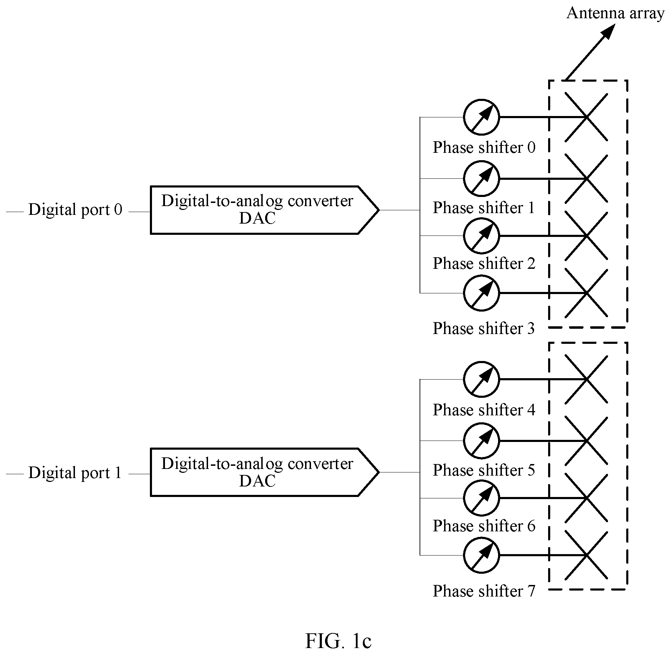

Another implementation is hybrid beamforming (hybrid beamforming, HBF), and a structure of hybrid beamforming is shown in FIG. 1c, which is a middle form of ABF and DBF. In the figure, a three-channel HBF architecture is used as an example, where each channel corresponds to two analog phase shifters. HBF has a specific number of digital ports to support digital beamforming, and each digital port drives one ABF subarray. Compared with ABF, in the same array scale, a scale of an analog subarray driven by each digital channel is smaller (four in FIG. 1c vs. six in FIG. 1b). Therefore, a beam is wider, reliability is better, and beam sweeping overheads are smaller. Generally, a ratio of the digital ports to the analog phase shifters of HBF varies with different frequencies and system design requirements. For example, in a high frequency band, a number of digital ports is small (4 to 16), and a single digital channel corresponds to more analog phase shifters (16 to 32), closer to ABF; while in a low frequency band, the system has more digital ports (32 to 128), and a single digital channel corresponds to fewer analog phase shifters (for example, 2 to 10).

Generally, both the HBF architecture and the ABF architecture have analog beams. When beams are aligned with a communication target, signal quality is improved. A direction (determined by a beam weight) of the analog beam needs to be configured before receiving and sending. For a terminal, a process in which the base station selects an analog beam is referred to as beam training or beam sweeping. In beam sweeping, the base station usually sends reference signals by using different analog beam weights, and the terminal separately measures the reference signals, and feeds back measurement results of the reference signals, to assist the base station in determining a beam with best quality.

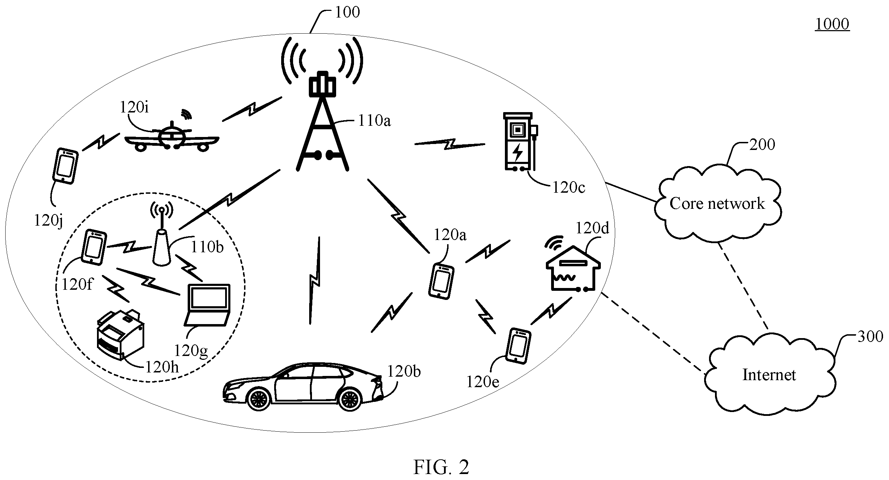

FIG. 2 is a diagram of an architecture of a communication system 1000 to which an embodiment of this application is applied. As shown in FIG. 2, the communication system includes a radio access network (radio access network, RAN) 100 and a core network 200. Optionally, the communication system 1000 may further include an internet 300. The RAN 100 includes at least one RAN node (for example, 110a and 110b in FIG. 2, which are collectively referred to as 110), and may further include at least one terminal (for example, 120a to 120j in FIG. 2, which are collectively referred to as 120). The RAN 100 may further include another RAN node, for example, a wireless relay device and/or a wireless backhaul device (not shown in FIG. 2). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner, and the RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may alternatively include the foregoing two or more different radio access systems. The RAN 100 may alternatively be an open RAN (open RAN, O-RAN).

The RAN node, also referred to as a radio access network device, a RAN entity, or an access node, is configured to help the terminal access the communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 2), may be a micro base station or an indoor base station (for example, 110b in FIG. 2), or may be a relay node or a donor node.

In another application scenario, a plurality of RAN nodes may cooperate to help the terminal implement radio access, and different RAN nodes separately implement a part of functions of a base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to the 3GPP. The RU may be configured to implement a radio frequency signal transceiver function. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes: CU-control plane and CU-user plane.

In different systems, the RAN node may have different names. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

Communication between an access network device and a terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 1.

Table 1

| ORAN network element | 3GPP protocol layer function |
| --- | --- |
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

For ease of description, the following provides descriptions by using an example in which the base station is used as the RAN node.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, self driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or mobile. The base station and the terminal may be deployed on land, including an indoor or outdoor device, a hand-held device, or a vehicle-mounted device; may be deployed on water; or may be deployed on an airplane, a balloon, or an artificial satellite. Application scenarios of the base station and the terminal are not limited in embodiments of this application.

Roles of the base station and the terminal may be relative. For example, the helicopter or the uncrewed aerial vehicle 120i in FIG. 2 may be configured as a mobile base station. For the terminal 120j accessing the radio access network 100 via 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b in FIG. 2 may be referred to as communication apparatuses having a base station function, and 120a to 120j in FIG. 2 may be referred to as communication apparatuses having a terminal function.

Communication between a base station and a terminal, between base stations, or between terminals may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as the smart grid, industrial control, smart transportation, and the smart city. The function of the terminal may alternatively be performed by a module (for example, a chip or a modem) in the terminal, or may be performed by an apparatus including the function of the terminal.

In a wireless communication system (for example, the communication system shown in FIG. 2), as a key technology in wireless communication, a MIMO technology may be used to meet a requirement for high-rate transmission. A communication process between a network device and a terminal device is used as an example. The network device performs channel measurement by using a reference signal, to obtain channel state information (channel state information, CSI) (or referred to as channel information). Then, the network device may calculate precoding information between the network device and the terminal device by using the channel information, and subsequently, MIMO communication may be implemented between the network device and the terminal device by using the precoding information.

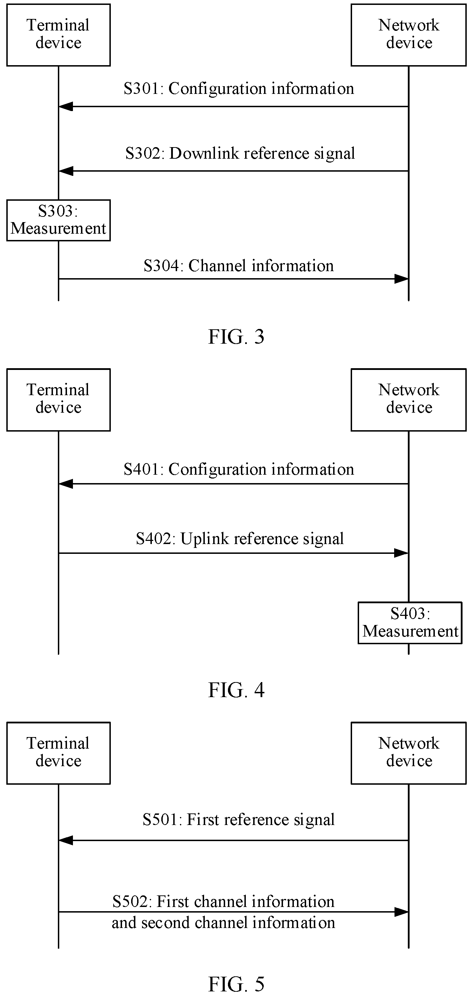

In an implementation example, to send data to the terminal device, the network device may perform precoding on a digital port, and select proper encoding and a proper modulation order. For example, precoding is for making an antenna (or a beam) more match a channel, to ensure better signal quality and less interference when sent data arrives at a terminal side, and a good modulation order and a good bit rate can ensure a maximum channel transmission capacity in a case of reliable data transmission. Settings of precoding and a modulation and coding scheme (modulation and coding scheme, MCS) need to be determined based on channel quality and a channel response. In a common method, the network device sends a downlink reference signal, and the terminal device determines a channel based on the downlink reference signal, and then feeds back corresponding channel state information, including precoding information, a number of transport streams supported by the channel (that is, an RI), and a CQI (used to feed back an MCS recommended by the terminal in current channel quality). This process is referred to as channel state information feedback (CSI feedback). In another method, uplink channel information is obtained through measurement by using an uplink reference signal, and then downlink channel information is further obtained based on channel reciprocity. The following separately describes a downlink reference signal-based implementation process and an uplink reference signal-based implementation process by using implementation examples shown in FIG. 3 and FIG. 4.

As shown in FIG. 3, the downlink reference signal-based implementation process includes the following steps.

S301: The network device sends configuration information to the terminal device, where the configuration information includes channel information reporting (or measurement) configuration information.

Specifically, the channel information reporting configuration information may be sent by the network device to the terminal device by using RRC signaling, and mainly includes two parts: resource configuration information and reporting configuration information.

The resource configuration information is information related to a measurement resource, and may be configured by using a three-level structure (resource configuration (resourceConfig) - resource set (resourceSet) - resource (resource)). In other words, the network device may configure one or more resource configurations for the terminal device. Each resource configuration includes one or more resource sets, and each resource set may include one or more resources. Each resource configuration/resource set/resource includes an index of its own. Optionally, the channel information reporting configuration information may further include some other parameters, for example, a resource periodicity and a signal type corresponding to the resource.

In addition, the reporting configuration information is information related to reporting of a measurement result, and is configured by using a reporting configuration (ReportConfig) in a protocol. The network device may configure one or more reporting configurations (ReportConfig) for the terminal device. Each reporting configuration includes reporting-related information such as a reporting indicator, reporting time, a reporting periodicity, and a reporting format. In addition, the reporting configuration further includes a resource configuration index indicating a measurement configuration based on which the reported result is obtained through measurement.

Optionally, the channel information reporting configuration information includes codebook configuration information (CodebookConfig), used to configure a first-type or second-type codebook. For example, fields included in the channel information reporting configuration information may be content shown in Table 2.

Table 2

| |
|---|
| CodebookConfig ::= // codebook configuration of 5G new radio Release 15 SEQUENCE {<br><br>    codebookType // codebook type CHOICE { |

```
            type1 // first type SEQUENCE {
        ..., // This is irrelevant to the focus of this application, and the content is ignored.
            },
            type2 // first type SEQUENCE {
                subType                                        CHOICE {
                    typeII                                     SEQUENCE {// second type (that
is, DFT-based codebook)
                        n1-n2-codebookSubsetRestriction        CHOICE { //
codebook subset restriction
        ..., // This is irrelevant to the focus of this application, and the content is ignored.
                        },
                        typeII-RI-Restriction                  BIT STRING
(SIZE (2)) // rank index restriction
                        },
                    typeII-PortSelection                       SEQUENCE {// second
type (port selection-based codebook)
                        portSelectionSamplingSize              ENUMERATED
{n1, n2, n3, n4} // port selection sampling size (corresponding to a size of the port selection-
based codebook) OPTIONAL, -- Need R
                        typeII-PortSelectionRI-Restriction     BIT STRING (SIZE
(2)) // reporting rank restriction. For example, two bits are (b0, b1). If a bit bi is 1, a PMI and
an RI of an (i+1)th rank cannot be reported, where i=0 or 1
                        }
                    },
                phaseAlphabetSize                              ENUMERATED {n4,
n8},// size of a phase set during quantization
                subbandAmplitude                               BOOLEAN, // whether
subband amplitude reporting is activated: true indicates that subband amplitude reporting is
activated
                numberOfBeams                                  ENUMERATED {two,
three, four} // number of reported beams
                }
            }
        }


    CodebookConfig-r16   ::=              SEQUENCE   {// codebook configuration
of 5G new radio Release 16
        codebookType                            CHOICE {// codebook type
            type2                                    SEQUENCE {// second type
                subType                                    CHOICE {
                    typeII-r16                                 SEQUENCE   {//
second type (that is, DFT-based codebook)
                        n1-n2-codebookSubsetRestriction-r16    CHOICE {//
codebook subset restriction
        ..., // This is irrelevant to the focus of this application, and the content is ignored.
```

```
                    },
                    typeII-RI-Restriction-r16                BIT STRING
(SIZE(4)) // reporting rank restriction For example, four bits are (b0, b1, b2, b3). If a bit bi is
1, a PMI and an RI of an (i+1)ᵗʰ rank cannot be reported, where i=0, 1, 2, or 3
                    },
                    typeII-PortSelection-r16    SEQUENCE {// second type (port
selection-based codebook)
                        portSelectionSamplingSize-r16             ENUMERATED
{n1, n2, n3, n4},// port selection sampling size (corresponding to a size of the port selection-
based codebook)
                        typeII-PortSelectionRI-Restriction-r16 BIT STRING (SIZE (4))
// reporting rank restriction For example, four bits are (b0, b1, b2, b3). If a bit bi is 1, a PMI
and an RI of an (i+1)ᵗʰ rank cannot be reported, where i=0, 1, 2, or 3
                    }
                },
                numberOfPMI-SubbandsPerCQI-Subband-r16 INTEGER (1..2), // number of
reported PMIs on each subband
                paramCombination-r16                      INTEGER (1..8) // codebook
parameter combination
            }
        }
    }
```

In an implementation example, in Release 16 (Release 16, R16), when a DFT-based codebook is used, a corresponding codebook parameter combination configuration is shown in Table 3. In Table 3, L is a number of bases per polarization selection, $p_\upsilon$ is a selection ratio per IDFT base, $\beta$ is a non-zero ratio, and u is a rank.

Table 3

| paramCombination-r16 | L | $p_\upsilon$ | | $\beta$ |
| --- | --- | --- | --- | --- |
| | | $\upsilon \in \{1,2\}$ | $\upsilon \in \{3,4\}$ | |
| 1 | 2 | ¼ | 1/8 | ¼ |
| 2 | 2 | ¼ | 1/8 | ½ |
| 3 | 4 | ¼ | 1/8 | ¼ |
| 4 | 4 | ¼ | 1/8 | ½ |
| 5 | 4 | ¼ | ¼ | ¾ |
| 6 | 4 | ½ | ¼ | ½ |
| 7 | 6 | ¼ | - | ½ |
| 8 | 6 | ¼ | - | ¾ |

In another implementation example, in R16, when a port-based codebook is used, a corresponding codebook parameter combination configuration is shown in Table 4. In Table 4, L is a number of bases per polarization selection, $p_\upsilon$ is a selection ratio per IDFT base, $\beta$ is a non-zero ratio, and $\upsilon$ is a rank.

Table 4

| paramCombination-r16 | L | $p_\upsilon$ | | β |
|---|---|---|---|---|
| | | $\upsilon \in \{1,2\}$ | $\upsilon \in \{3,4\}$ | |
| 1 | 2 | ¼ | 1/8 | ¼ |
| 2 | 2 | ¼ | 1/8 | ½ |
| 3 | 4 | ¼ | 1/8 | ¼ |
| 4 | 4 | ¼ | 1/8 | ½ |
| 5 | 4 | ¼ | ¼ | ¾ |
| 6 | 4 | ½ | ¼ | ½ |

S302: The network device sends a downlink reference signal. For example, the network device sends a downlink signal (generally the downlink reference signal) on the resource configured by using the resource configuration information, so that the terminal device can measure the downlink signal to determine quality of each resource (that is, quality of a beam corresponding to the resource).

S303: The terminal device measures the downlink reference signal based on the channel information reporting configuration information. The downlink reference signal mainly includes an SSB, a CSI-RS, a tracking reference signal (tracking reference signal, TRS), and the like. A PBCH may carry a master system information block (master information block, MIB), used to configure master system information of a cell.

S304: The terminal device sends channel information to the network device. For example, the channel information may include a beam measurement report, and the report includes channel state information (channel state information, CSI). The channel state information may include one or more of the following: an index or indexes of one or more resources, a CQI, reference signal received quality (reference signal received power, RSRP), a precoding matrix indicator (precoding matrix indicator, PMI), a rank indicator (rank indicator, RI), a layer indicator (layer indicator, LI), a channel state information resource index (CSI-RS Index, CRI) field, a synchronization/broadcast signal block resource index (Synchronization Signal/Physical broadcast channel Block Resource Index, SSBRI), and the like.

Optionally, for a codebook of Release 15 (Release 15, R15), a PMI matrix per layer may be equivalent to W = $W_1W_2$. A dimension of W is $P_{CSI-RS} \times N_3$. A dimension of $W_1$ is $P_{CSI-RS} \times 2L$ (or is a wideband precoding matrix). A dimension of $W_2$ is $2L \times N_3$ (or is a precoding matrix for each subband). $P_{CSI-RS}$ is a number of CSI-RS ports. $N_3$ is a number of subbands for PMI feedback (or a number of PMIs).

Optionally, a PMI matrix may be equivalently represented as $W = W_1\widetilde{W}_2W_f^H$. A dimension of W is $P_{CSI-RS} \times N_3$. A dimension of $W_1$ is $P_{CSI-RS} \times 2L$ (or is a wideband precoding matrix). A dimension of $\widetilde{W}_2W_f^H$ is $2L \times N_3$ (corresponding to $W_2$ in Release 15, that is, a precoding matrix for each subband). A dimension of $\tilde{W}_2$ is $2L \times M$ (or is a compressed matrix). A dimension of $W_f^H$ is $M \times N_3$ (is M rows in an IDFT matrix whose dimension is $N_3 \times N_3$, that is, a conjugate of M columns in a DFT matrix $W_f$ whose dimension is $N_3 \times N_3$). $P_{CSI-RS}$ is a number of CSI-RS ports.

$M = \left\lceil p_\upsilon \frac{N_3}{R} \right\rceil$ is a number of selected IDFT base vectors. $N_3$ is a number of subbands for PMI feedback (or a number of PMIs). During final feedback, only port or DFT codebook information related to $W_1$, IDFT base selection information related to $W_f^H$, and non-zero elements in $\tilde{W}_2$ need to be fed back. For more details, refer to 38.214. Details are not described again.

For example, Table 5 shows formats of a part of fields in beam measurement reporting information in the R15 protocol. A CRI field and an SSBRI field indicate to-be-reported resource indexes. Only the CRI or the SSBRI may be reported, or both the CRI and the SSBRI may be reported. $\lceil \log_2(K_s^{CSI-RS}) \rceil$ and $\lceil \log_2(K_s^{SSB}) \rceil$ are lengths of the CRI field and the SSBRI field. $K_s^{CSI-RS}$ represents a number of CSI-RS resources in a resource set s. $K_s^{SSB}$ represents a number of SSB resources in the resource set s. $\lceil \cdot \rceil$ represents rounding up. The RSRP is reported by using a differential reporting criterion. To be specific, RSRP of an optimal resource (an RSRP field in Table 1) is reported through 7-bit quantization, and another RSRP (differential RSRP in Table 1) field is reported through 4-bit quantization.

Table 5

| Field<br>(Field) | Bit width<br>(Bit width) |
|---|---|
| CRI | $\left\lceil \log_2(K_s^{CSI-RS}) \right\rceil$ |
| SSBRI | $\left\lceil \log_2(K_s^{SSB}) \right\rceil$ |
| RSRP | 7 |
| Differential RSRP | 4 |

Optionally, the channel state information may be carried in uplink control information (uplink control information, UCI) and transmitted by using a physical uplink control channel (Physical Uplink Control Channel, PUCCH) or a physical uplink shared channel (Physical Uplink Shared Channel, PUSCH).

In addition, after obtaining the channel information in step S304, the network device may determine scheduling information, including one or more of the following: an MCS, RB resource allocation, a transmit beam, and a receive beam, to improve a degree of matching the beam with the channel, helping improve a communication rate and efficiency.

As shown in FIG. 4, the uplink reference signal-based implementation process includes the following steps.

S401: The network device sends configuration information to the terminal device. For example, the configuration information may include configuration information of a reference signal. For example, the reference signal may be a sounding reference signal (sounding reference signal, SRS).

Specifically, the configuration information may be sent by the network device to the terminal device by using RRC signaling, and the configuration information mainly includes resource configuration information of the reference signal. The resource configuration information of the reference signal is information related to a measurement resource, and is configured by using a two-level structure (resource set resourceSet - resource (resource)) in a protocol. The network device may configure one or more resource sets for the terminal device. Each resource set may include one or more resources. Each resource set/resource includes an index of its own. In addition, some other parameters are further included, for example, a resource periodicity and a signal type corresponding to the resource.

For example, the resource configuration information of the reference signal may include content shown in Table 6.

Table 6

```
    SRS-ResourceSet ::= //SRS resource set configuration information
SEQUENCE {
        srs-ResourceSetId //SRS resource set index                          SRS-
ResourceSetId,
        srs-ResourceIdList //SRS resource list, which may include a plurality of SRS
resources              SEQUENCE (SIZE(1..maxNrofSRS-ResourcesPerSet)) OF SRS-
ResourceId       OPTIONAL, -- Cond Setup
        resourceType //SRS resource type                                   CHOICE {
            aperiodic //aperiodic SRS resource
SEQUENCE {
                aperiodicSRS-ResourceTrigger //aperiodic SRS trigger
INTEGER (1..maxNrofSRS-TriggerStates-1),
                csi-RS //CSI-RS index associated with the SRS resource set
```

```
NZP-CSI-RS-ResourceId                                    OPTIONAL, -- Cond
NonCodebook

               slotOffset //time offset position of the aperiodic SRS resource
INTEGER (1..32)                                          OPTIONAL, -- Need S

          ...,
     },
          semi-persistent //semi-persistent scheduling SRS resource
SEQUENCE {
               associatedCSI-RS //CSI-RS associated with the SRS resource
NZP-CSI-RS-ResourceId                                    OPTIONAL, -- Cond
NonCodebook

          ...
     },
          periodic    //periodic SRS resource
SEQUENCE {
               associatedCSI-RS                    NZP-CSI-RS-ResourceId
OPTIONAL, -- Cond NonCodebook

          ...
     }
     },
          usage //usage of the SRS resource set: beam management, codebook, non-codebook,
and antenna switching                     ENUMERATED {beamManagement,
codebook, nonCodebook, antennaSwitching}
          alpha //SRS power control parameter
Alpha                                                    OPTIONAL, --
Need S
          p0      //SRS power control parameter
INTEGER (-202..24)                                       OPTIONAL, --
Cond Setup
          pathlossReferenceRS //downlink reference signal for SRS path loss calculation
PathlossReferenceRS-Config                               OPTIONAL, -- Need
M
          srs-PowerControlAdjustmentStates //SRS power control parameter
ENUMERATED { sameAsFci2, separateClosedLoop}             OPTIONAL, --
```

```
Need S

        ...,

    }


    SRS-Resource ::= //SRS resource configuration                        SEQUENCE {
        srs-ResourceId //SRS resource index                              SRS-
ResourceId,
        nrofSRS-Ports    //number of SRS resource ports
ENUMERATED {port1, ports2, ports4},
        ptrs-PortIndex                        ENUMERATED {n0, n1 }
OPTIONAL,     -- Need R
        transmissionComb//frequency domain comb configuration of the SRS resource
CHOICE {
            n2                                SEQUENCE {
                combOffset-n2                     INTEGER (0..1),
                cyclicShift-n2                    INTEGER (0..7)
            },
            n4                                SEQUENCE {
                combOffset-n4                     INTEGER (0..3),
                cyclicShift-n4                    INTEGER (0..11)
            }
        },
        resourceMapping //SRS resource mapping
SEQUENCE {
            startPosition //SRS time domain position information
INTEGER (0..5),
            nrofSymbols     //number of consecutive OFDM symbols of the SRS resource
ENUMERATED {n1, n2, n4},
            repetitionFactor//SRS resource repetition factor
ENUMERATED {n1, n2, n4}
        },
        freqDomainPosition//frequency domain position of the SRS resource
INTEGER (0..67),
        freqDomainShift     //frequency domain shift of the SRS resource
```

```
INTEGER (0..268),

        freqHopping        //SRS resource and frequency hopping information

SEQUENCE {

        c-SRS //determine a bandwidth of the SRS resource together with the b-SRS

INTEGER (0..63),

        b-SRS //determine a bandwidth of the SRS resource together with the c-SRS

INTEGER (0..3),

        b-hop //frequency hopping information

INTEGER (0..3)

        },

        ...

        sequenceId        //SRS resource sequence index

INTEGER (0..1023),

        spatialRelationInfo //spatial relationship information                SRS-

SpatialRelationInfo                                        OPTIONAL,    -- Need R

        ...,

        [[

        resourceMapping-r16                SEQUENCE {

                startPosition-r16                INTEGER (0..13),

                nrofSymbols-r16                ENUMERATED {n1, n2, n4},

                repetitionFactor-r16                ENUMERATED {n1, n2, n4}

        }

OPTIONAL        -- Need R

        ]]

        }
```

S402: The terminal sends one or more uplink reference signals.

S403: The network device measures the uplink reference signals to obtain channel information. Subsequently, data scheduling, precoding, and the like may be performed based on the channel information.

The foregoing implementation examples may be applied to a MIMO system. The downlink reference signal-based implementation process shown in FIG. 3 is used as an example. The CSI-RS is sent through a port of the network device. In other words, overheads of the CSI-RS are related to a number of ports of the network device. In the MIMO system, as a frequency band increases and a requirement for high-rate communication increases, the number of ports of the network device may gradually increase. Consequently, overheads of a reference signal (for example, the CSI-RS) for channel measurement increase, and more transmission resources are occupied, affecting network throughput performance.

To resolve the foregoing problem, this application provides a communication method and a related device, to reduce overheads in a channel measurement process, improving resource utilization and reducing power consumption of a terminal device. Detailed descriptions are provided below with reference to the accompanying drawings.

FIG. 5 is a diagram of an implementation of a communication method according to this application. The method includes the following steps.

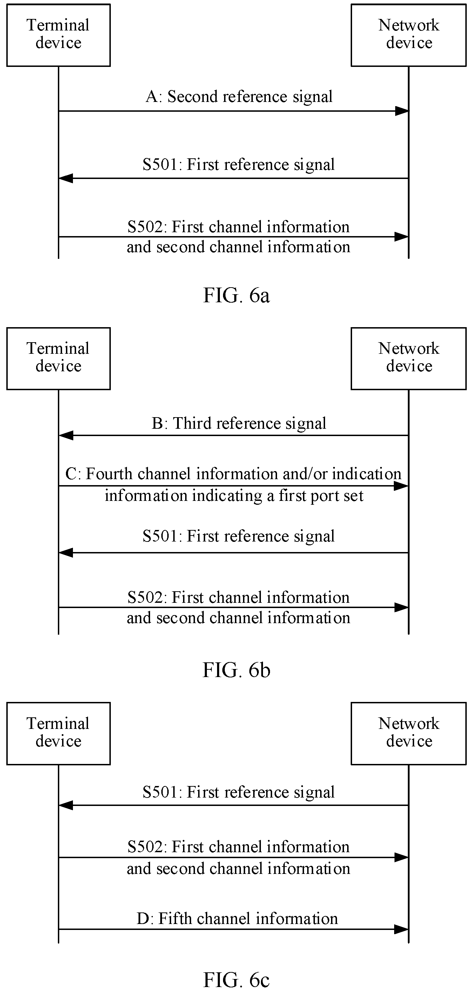

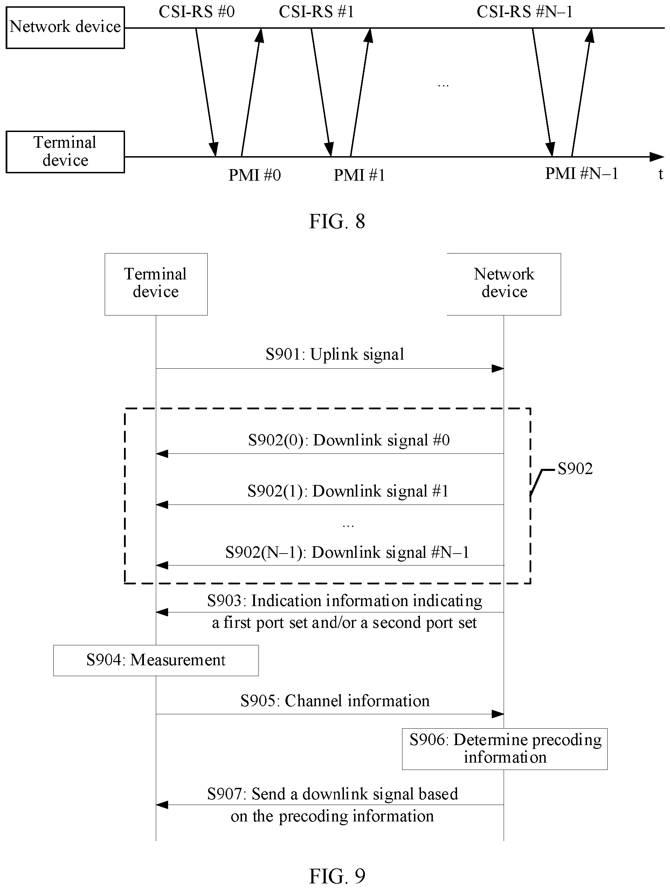

It should be noted that in FIG. 5, the method is illustrated by using an example in which a terminal device and a network device are used as execution bodies of the interaction illustration. However, the execution bodies of the interaction illustration are not limited in this application. For example, in FIG. 5 and a corresponding implementation, the terminal device that performs S501 and S502 may be the terminal device, may be a chip, a chip system, or a processor that supports the terminal device in implementing the method, or may be a logical module or software that can implement all or a part of functions of the terminal device. In FIG. 5 and the corresponding implementation, the network device that performs S501 and S502 may be the network device, may be a chip, a chip system, or a processor that supports the network device in implementing the method, or may be a logical module or software that can implement all or a part of functions of the network device. Similarly, the following method shown in FIG. 6a, FIG. 6b, FIG. 6c, or FIG. 9 may be performed by a terminal device (and/or a network device), or may be performed by a chip, a chip system, a processor, a logical module, or software that supports a terminal device (and/or a network device) in implementing the method.

Optionally, the network device that performs the method shown in FIG. 5, FIG. 6a, FIG. 6b, FIG. 6c, or FIG. 9 may be an ORAN network element, including, but not limited to, one or more of an O-CU-CP, an O-CU-UP, an O-DU, and an O-RU.

S501: The network device sends a first reference signal. Correspondingly, the terminal device receives the first reference signal. The first reference signal corresponds to a first port set and a second port set, and each port set includes one or more ports.

In this application, a reference signal (for example, the first reference signal and a third reference signal mentioned below) received by the terminal device from the network device may be a downlink reference signal. For example, the downlink reference signal may include a CSI-RS and an SSB. For example, the first reference signal received by the terminal device in step S501 is a CSI-RS. A port (for example, the port in the first port set, the port in the second port set, and a port that may exist in a third port set) corresponding to the first reference signal may be a CSI-RS port. Correspondingly, channel information (for example, second channel information mentioned below) of the CSI-RS port may be a channel state information (channel state information, CSI) report (report). For example, the CSI report may include but is not limited to one or more of a precoding matrix indicator (precoding matrix indicator, PMI), a rank indicator (rank indicator, RI), a channel quality indicator (channel quality indicator, CQI), and a layer indicator (layer indicator, LI).

It should be noted that, that the first reference signal sent by the network device in step S501 corresponds to the first port set and the second port set may be understood as that in a plurality of ports used by the network device to send the first reference signal, one part of ports are located in (or included in or belong to) the first port set, and the other part of ports are located in (or included in or belong to) the second port set. In other words, the plurality of ports used by the network device to send the first reference signal may include the port in the first port set and the port in the second port set.

For example, a number of ports in the first port set may be denoted as $L_1$, and a number of ports in the second port set may be denoted as $L_2$. In an implementation, $L_1$ and $L_2$ are not equal. For example, $L_2 > L_1$. Alternatively, $L_2 < L_1$.

In another implementation, $L_1$ and $L_2$ are equal, that is, $L_1 = L_2$.

Optionally, a value of $L_1$ or $L_2$ is one of 1, 2, 4, 6, 8, 12, and 16.

Optionally, the plurality of ports used by the network device to send the first reference signal may not include a port other than the port in the first port set and the port in the second port set. Alternatively, the plurality of ports used by the network device to send the first reference signal may include another port in addition to the port in the first port set and the port in the second port set, and the another port may be included in another port set, for example, the third port set.

Optionally, in addition to corresponding to one or more port sets, the first reference signal may also correspond to one or more discrete fourier transform (discrete fourier transform, DFT) beam sets (or IDFT beam sets). In other words, the "port set" may alternatively be the "DFT beam set (or the IDFT beam set)". To be specific, the first reference signal corresponds to a first DFT beam set and a second DFT beam set, and each DFT beam set includes one or more DFT beams (or the first reference signal corresponds to a first IDFT beam set and a second IDFT beam set, and each IDFT beam set includes one or more IDFT beams). In addition, the "DFT beam" may alternatively be another description, for example, a DFT vector, a DFT base, an IDFT vector, or an IDFT base. For example, first channel information (port-level) is obtained through measurement based on the first reference signal, and then DFT processing is performed in a port dimension, that is, the first channel information is converted into beam-level channel information. Correspondingly, channel information of the first DFT beam set and channel information of the second DFT beam set may be at least one of a corresponding CSI report, a corresponding rank indicator, a corresponding channel quality indicator, a corresponding layer indicator, a corresponding precoding indicator, and the like.

The following mainly uses the port set for description, and a similar manner may be extended to the beam set (for example, the DFT beam set or the IDFT beam set).

S502: The terminal device sends the first channel information and the second channel information. Correspondingly, the network device receives the first channel information and the second channel information. The first channel information is determined based on the first port set corresponding to the first reference signal and the second port set corresponding to the first reference signal, and the second channel information is determined based on the second port set corresponding to the first reference signal.

Optionally, before step S501, the terminal device may further receive configuration information from the network device, where the configuration information is used to configure the first reference signal. For a specific implementation of the configuration information, refer to the process of step S301. Details are not described herein again.

It should be understood that after the terminal device receives the first reference signal in step S501, the terminal device may determine, based on the first reference signal corresponding to the first port set and the second port set, channel information corresponding to the first port set and channel information corresponding to the second port set. Then, in step S502, the terminal device may send the first channel information and the second channel information based on the channel information corresponding to the first port set and the channel information corresponding to the second port set.

Optionally, that the second channel information is determined based on the second port set corresponding to the first reference signal may be understood as that the second channel information includes the channel information of the second port set corresponding to the first reference signal (for example, the second channel information includes a PMI), or the second channel information indicates the channel information of the second port set corresponding to the first reference signal (for example, the second channel information indicates a PMI).

Optionally, that the first channel information is determined based on the first port set corresponding to the first reference signal and the second port set corresponding to the first reference signal may be understood as that the first channel information corresponds to a combination coefficient matrix (or a combination coefficient vector, a combination coefficient, a weighting coefficient, or a coefficient) between the channel information of the first port set and the channel information of the second port set. "Corresponding to" may alternatively be another term, for example, including and indicating.

Further, optionally, when the port corresponding to the first reference signal further includes the port in the third port set, the terminal device may further send a combination coefficient matrix (or a combination coefficient vector, a combination coefficient, a weighting coefficient, or a coefficient) between channel information of the third port set and the channel information of the first port set (or the second port set).

Optionally, in a process in which the terminal device sends the first channel information and the second channel information in step S502, the terminal device may send the first channel information and the second channel information, or may send first indication information and second indication information, where the first indication information indicates the first channel information, and the second indication information indicates the second channel information.

Optionally, the first channel information and the second channel information may be carried in a same message/signaling/information or different messages/signaling/information.

Optionally, the first indication information and the second indication information may be carried in a same message/signaling/information or different messages/signaling/information.

In a possible implementation, the terminal device and the network device may reach a consistent understanding of the first port set and the second port set. In other words, the terminal device may determine port sets corresponding to the first channel information and the second channel information that are sent in step S502. After the network device receives the first channel information and the second channel information in step S502, the network device may determine the port sets corresponding to the first channel information and the second channel information, and determine precoding information based on the determined port sets. The terminal device and the network device may determine the first port set and the second port set in a plurality of manners. The following provides descriptions with reference to some implementation examples.

Implementation example 1: As shown in FIG. 6a, before the terminal device sends the first channel information and the second channel information in step S502, the method further includes the following step.

Step A: The terminal device sends a second reference signal. Correspondingly, the network device receives the second reference signal. The second reference signal is used to determine third channel information and/or the first port set, and the third channel information is determined based on the first port set corresponding to the second reference signal.

It should be noted that step A may be performed before step S501, or may be performed after step S501. This is not limited herein. In the figure, the former is used as an example for description.

Specifically, in implementation example 1, the terminal device may further send the second reference signal. After the network device receives the second reference signal by using one or more port sets (including at least the first port set), the network device can subsequently determine the third channel information and/or the first port set based on the second reference signal. Therefore, the network device can obtain, based on the second reference signal, the channel information corresponding to the first port set.

Optionally, in implementation example 1, the terminal device may further receive indication information indicating the first port set and/or the second port set, so that the terminal device can determine, based on an indication of the network device, the port sets corresponding to the first channel information and the second channel information, and the terminal device and the network device can reach the consistent understanding of the first port set and/or the second port set. Therefore, the network device can obtain accurate precoding information based on the first channel information and the second channel information (and/or the third channel information). In addition, because the third channel information and information about the first port set do not need to be fed back, feedback overheads of the terminal device are reduced.

Optionally, before the terminal device sends the second reference signal, the terminal device may further receive configuration information corresponding to the second reference signal. For example, the second reference signal may include an SRS. For the configuration information corresponding to the second reference signal, refer to the process of step S401. Details are not described herein again.

Implementation example 2: As shown in FIG. 6b, before the terminal device sends the first channel information and the second channel information in step S502, the method further includes the following steps.

Step B: The network device sends a third reference signal. Correspondingly, the terminal device receives the third reference signal. The third reference signal is used to determine fourth channel information and/or the first port set, and the fourth channel information is determined based on the first port set corresponding to the third reference signal.

Step C: The terminal device sends the fourth channel information and/or indication information indicating the first port set. Correspondingly, the network device receives the fourth channel information and/or the indication information corresponding to the first port channel set.

It should be noted that step B and step C may be performed before step S501, or may be performed after step S501. This is not limited herein. In the figure, the former is used as an example for description.

Specifically, in implementation example 2, the terminal device may further receive the third reference signal corresponding to the first port set, and the terminal device may determine, based on the third reference signal, and send the fourth channel information and/or the indication information indicating the first port set. Therefore, the network device can obtain the channel information corresponding to the first port set. In addition, the network device can determine, based on the information sent by the terminal device, the port sets corresponding to the first channel information and the second channel information, and the terminal device and the network device can reach the consistent understanding of the first port set and/or the second port set. Therefore, the network device can obtain accurate precoding information based on the first channel information and the second channel information. In addition, because the fourth channel information and information about the first port set have been fed back before, feedback overheads of the terminal device are reduced.

Further, different periodicities may be used for a combined process of step B and step C and a combined process of step S501 and step S502, to implement different overheads and cope with different channel changes. For example, step B and step C are performed by using T as a periodicity, and step S501 and step S502 are performed by using kT as a periodicity, where k>1. In addition, the former corresponds to a port with a faster channel change, and the latter corresponds to a port with a slower channel change.

Optionally, before the terminal device receives the third reference signal, the terminal device may further receive configuration information corresponding to the third reference signal. For example, the third reference signal may include a CSI-RS. For the configuration information corresponding to the third reference signal, refer to the process of step S401. Details are not described herein again.

Optionally, in implementation example 2, the fourth channel information, the indication information indicating the first port set, the first channel information in step S502, and the second channel information in step S502 may be carried in a same message/signaling/information, or may be carried in different messages/signaling/information. This is not limited herein.

Implementation example 3: As shown in FIG. 6c, in addition to the terminal device sending the first channel information and the second channel information in step S502, the method further includes the following step.

Step D: The terminal device sends fifth channel information. Correspondingly, the network device receives the fifth channel information. The fifth channel information is determined based on the first port set corresponding to the first reference signal.

Specifically, in implementation example 3, the terminal device may further send the fifth channel information determined based on the first port set corresponding to the first reference signal. Therefore, the network device can obtain the channel information corresponding to the first port set. In addition, the network device can determine, based on the fifth channel information, the port sets corresponding to the first channel information and the second channel information, and the terminal device and the network device can reach the consistent understanding of the first port set and/or the second port set. Therefore, the network device can obtain accurate precoding information based on the first channel information and the second channel information. Further, the first port set may be determined by the terminal device. For example, the terminal device determines the first port set, the second port set, and the corresponding first channel information, second channel information, and fifth channel information based on the first reference signal. Therefore, the plurality of ports for the first reference signal are grouped into more port groups, helping feed back more channel information and reduce total feedback overheads.

Further, different periodicities are used for a combined process of step D and a combined process of step S501 and step S502, to implement different overheads and cope with different channel changes. For example, step D is performed by using T as a periodicity, and step S501 and step S502 are performed by using kT as a periodicity, where k>1. In addition, the former corresponds to a port with a faster channel change, and the latter corresponds to a port with a slower channel change.

Optionally, in implementation example 3, the fifth channel information in step D, the first channel information in step S502, and the second channel information in step S502 may be carried in a same message/signaling/information, or may be carried in different messages/signaling/information. This is not limited herein. For example, in implementation example 3, when the fifth channel information in step D and the first channel information and the second channel information in step S502 are carried in different messages/signaling/information, step D may be performed before step S502, or may be performed after step S502. This is not limited herein. In the figure, the latter is used as an example for description.

In a possible implementation, in the method shown in FIG. 5, the method further includes: The terminal device sends an index of the first port set and/or an index of the second port set. Specifically, the first channel information sent by the terminal device is determined based on the first port set corresponding to the first reference signal and the second port set corresponding to the first reference signal, and the second channel information sent by the terminal device is determined based on the second port set corresponding to the first reference signal. Correspondingly, the terminal device sends the index of the first port set and/or the index of the second port set, so that the network device can determine the port sets corresponding to the first channel information and the second channel information, and the terminal device and the network device can reach the consistent understanding of the first port set and/or the second port set. Therefore, the network device can obtain accurate precoding information based on the first channel information and the second channel information.

Optionally, the index of the first port set and the index of the second port set that are sent by the terminal device, the first channel information in step S502, and the second channel information in step S502 may be carried in a same message/signaling/information, or may be carried in different messages/signaling/information. This is not limited herein.

In a possible implementation, in the method shown in FIG. 5, the method further includes: The terminal device sends capability information, where the capability information indicates that sending of the first channel information is supported (or the methods in one or more implementation examples of this application are supported). Specifically, the terminal device may further send the capability information indicating that sending of the first channel information is supported, so that the network device can schedule, based on the capability information, the terminal device to feed back low-dimensional channel information, and then the network device can obtain high-dimensional precoding information, reducing overheads in a channel measurement process.

Optionally, the capability information sent by the terminal device, the first channel information in step S502, and the second channel information in step S502 may be carried in a same message/signaling/information, or may be carried in different messages/signaling/information. This is not limited herein.

In a possible implementation, the first channel information and the second channel information received by the network device in step S502 are used to determine precoding information, and the precoding information satisfies:

$$\mathbf{W} = \alpha \otimes \begin{bmatrix} \mathbf{W_0} \\ \mathbf{W_1} \end{bmatrix}; \text{ or } \mathbf{W} = \alpha \times \begin{bmatrix} \mathbf{W_0} \\ \mathbf{W_1} \end{bmatrix}$$

$\mathbf{W}$ represents the precoding information. $\alpha$ represents the first channel information. $\otimes$ represents a Kronecker product (Kronecker product). $\mathbf{W_0}$ represents precoding information corresponding to channel information determined based on the first port set. $\mathbf{W_1}$ represents the second channel information (that is, precoding information corresponding to channel information determined based on the second port set).

Optionally, $\mathbf{W_0}$ represents the precoding information corresponding to the channel information determined based on the first port set, and the channel information determined based on the first port set may include at least one of the following:

the third channel information, where the third channel information is determined based on the first port set corresponding to the second reference signal sent by the terminal device (or received by the network device), and for a determining process of the third channel information, refer to the descriptions of FIG. 6a;
the fourth channel information, where the fourth channel information is determined based on the first port set corresponding to the third reference signal received by the terminal device (or sent by the network device), and for a determining process of the fourth channel information, refer to the descriptions of FIG. 6b; and
the fifth channel information, where the fifth channel information is determined based on the first port set corresponding to the first reference signal, and for a determining process of the fifth channel information, refer to the descriptions of FIG. 6c.

Optionally, $\alpha$ satisfies:

$$\boldsymbol{\alpha} = [\alpha_0, \alpha_1]^T$$

$\alpha_0$ represents a coefficient of the first port set. $\alpha_1$ represents a coefficient of the second port set. $[\alpha_0, \alpha_1]^T$ represents a transpose of a matrix $[\alpha_0, \alpha_1]$. Correspondingly, the precoding information W satisfies:

$$\mathbf{W} = \begin{bmatrix} \alpha_0 \mathbf{W_0} \\ \alpha_1 \mathbf{W_1} \end{bmatrix}$$

Further, if the number of ports in the first port set is denoted as $L_1$, and the number of ports in the second port set is denoted as $L_2$, a dimension of $\mathbf{W_0}$ may be $2L_1 \times 1$, and a dimension of $\mathbf{W_1}$ may be $2L_2 \times 1$.

In addition, in an implementation process of the precoding information, $\mathbf{W_0}$ and $\mathbf{W_1}$ may represent transmission of one or more data streams. The following provides descriptions with reference to some implementation examples.

Implementation example A: $\mathbf{W_0}$ and $\mathbf{W_1}$ respectively represent precoding information corresponding to the channel information determined based on the first port set and precoding information corresponding to the second channel information during transmission of a same data stream.

The channel information determined based on the first port set may include one or more of the third channel information, the fourth channel information, and the fifth channel information. The second channel information is the channel information determined based on the second port set.

For ease of description, in implementation example A, an example in which the same data stream is denoted as an $l^{th}$ data stream (or layer) is used. To be specific, $\mathbf{W_0}$ and $\mathbf{W_1}$ respectively represent precoding information corresponding to the channel information determined based on the first port set and precoding information corresponding to the second channel information during transmission of the $l^{th}$ data stream. A similar manner may be directly extended to a plurality of streams.

In implementation example A, the channel information (for example, the third channel information, the fourth channel information, or the fifth channel information) corresponding to the first port set is denoted as $\mathbf{H_0}$, and the channel information (for example, the second channel information) corresponding to the second port set is denoted as $\mathbf{H_1}$. Precoding matrices (or vectors) respectively obtained by using the two groups of channel information are $\mathbf{W_0}$ and $\mathbf{W_1}$. According to any one of the foregoing implementation example 1 to implementation example 3, the network device may determine $\mathbf{W_0}$ (that is, the channel information corresponding to the first port set).

For example, in implementation example 1 described above, the network device may obtain the channel information (that is, $\mathbf{H_0} = \mathbf{H_{SRS}^T}$) or the precoding information (that is, the precoding matrix $\mathbf{W_0}$) of the first port set. Therefore, the terminal device may not need to separately report the precoding information (that is, $\mathbf{W_0}$) in step S502.

For example, in implementation example 2 described above, the network device may obtain the channel information (that is, $\mathbf{H_0} = \mathbf{H_{CSI-RS}^{[2]}}$) or the precoding information (that is, the precoding matrix $\mathbf{W_0}$) of the first port set by using a downlink reference signal (for example, another CSI-RS or the CSI-RS above). Therefore, the terminal device may not need to separately report the channel information (that is, $\mathbf{W_0}$) in step S502.

Further, the first channel information sent by the terminal device in step S502 may be understood as the weighting coefficient between the two groups of channels, or may be understood as a weighting coefficient between the precoding matrices of the two port sets. For example, a vector corresponding to the weighting coefficient is denoted as $\alpha = [\alpha_0, \alpha_1]^T$, where $\|\boldsymbol{\alpha}\|_2 = |\alpha_0^2| + |\alpha_1^2| = 1$. Correspondingly, the $l^{th}$ data stream $\mathbf{x_l}(t)$ is jointly transmitted by using the two port sets, which may be represented as:

$$\mathbf{y_l}(\mathbf{t}) = [\mathbf{H_0}, \mathbf{H_1}] \begin{bmatrix} \alpha_0 \mathbf{W_0} \\ \alpha_1 \mathbf{W_1} \end{bmatrix} \mathbf{x_l}(\mathbf{t}) + \mathbf{n}(\mathbf{t})$$

$[\mathbf{H_0}, \mathbf{H_1}]$ may be considered as channel coefficients corresponding to the two port sets, and $\begin{bmatrix} \alpha_0 \mathbf{W_0} \\ \alpha_1 \mathbf{W_1} \end{bmatrix}$ represents joint precoding of the two port sets. The weighting coefficient may be obtained by using a conventional method. For example, a $1^{st}$ column of a matrix $\mathbf{V} = [\mathbf{v_0}, \mathbf{v_1}]$ may be obtained through singular value decomposition $[\mathbf{H_0 W_0}, \mathbf{H_1 W_1}] = \mathbf{U} \times \Lambda \times \mathbf{V^H}$ corresponding to $[\mathbf{H_0 W_0}, \mathbf{H_1 W_1}]$, that is, $\alpha = \mathbf{v_0}$.

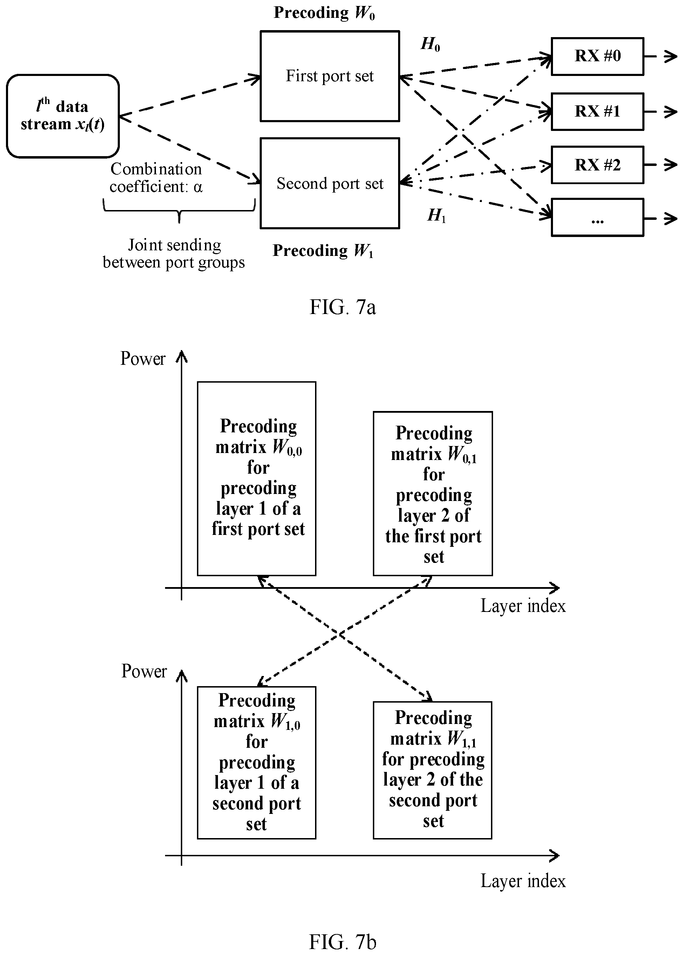

In an application example of implementation example A, FIG. 7a is a diagram of joint sending by using the two port sets. $\mathbf{H_0}$ represents a channel between the first port set and a receive side. $\mathbf{H_1}$ represents a channel between the second port set and the receive side. $\mathbf{W_0}$ and $\mathbf{W_1}$ respectively represent precoding corresponding to the two port sets. $\alpha$ corresponds to a combination coefficient (that is, the first channel information) between the two port sets.

Optionally, for the two port sets, the coefficient corresponding to one of the two port sets may be further normalized, that is, $\alpha_0 = 1$, and only a coefficient $\alpha_1\alpha_0^{-1}$ needs to be fed back. Correspondingly, after receiving the feedback coefficient (that is, the first channel information) in step S501, the network device may normalize the coefficient.

In another implementation, an amplitude of a coefficient k in the precoding matrix corresponding to one of the two port sets may be further normalized (or a phase is returned to 0), or the entire coefficient may be further normalized. Further, the coefficient k is specified by the network device, or the coefficient k is determined and reported by the terminal device to the network device.

Without loss of generality, the first port set corresponds to precoding $\mathbf{W_0} = [w_{0,0}, w_{0,1}, ...]^T$ (a number of elements of the vector is the same as the number of ports in the port set). For example, the coefficient k may be specifically k=0, making $w_{0,0} = |w_{0,0}|$ or $w_{0,0} = 1$. In this manner, it can be ensured that there is no deviation between $\mathbf{W_0}$ and the combination coefficient $\alpha$ calculated by the network device and those calculated by the terminal side, or the deviation can be ignored.

Alternatively, without loss of generality, the second port set corresponds to precoding $\mathbf{W_1} = [w_{1,0}, w_{1,1}, ...]^T$ (a number of elements of the vector is the same as the number of ports in the port set). For example, the coefficient k may be specifically k=0, making $w_{1,0} = |w_{1,0}|$ or $w_{1,0} = 1$. In this manner, it can be ensured that there is no deviation between $\mathbf{W_1}$ and the combination coefficient $\alpha$ calculated by the network device and those calculated by the terminal side, or the deviation can be ignored.

In another implementation, relative amplitudes and/or phases of coefficients k in the precoding matrices corresponding to the two port sets may be reported, that is, the amplitude and/or the phase corresponding to $w_{1,k}/w_{0,k}$ are/is reported, or the amplitude and/or the phase corresponding to $w_{0,k}/w_{1,k}$ are/is reported. Further, the coefficient k is specified by the network device, or the coefficient k is determined and reported by the terminal device to the network device.

In another implementation, all the solutions in this application may be extended to more port sets (for example, the third port set, denoted as G), and precoding matrices of different port sets may be obtained by using different uplink or downlink signals. In this case, a combination coefficient between G port sets needs to be fed back. Similarly, a correspondence between each port set and a combination coefficient may be agreed on.

Implementation example B: $\mathbf{W_0}$ represents precoding information corresponding to the channel information determined based on the first port set during transmission of a first data stream, and $\mathbf{W_1}$ represents precoding information corresponding to the second channel information during transmission of a second data stream.

The channel information determined based on the first port set may include one or more of the third channel information, the fourth channel information, and the fifth channel information. The second channel information is the channel information determined based on the second port set.

It should be understood that in implementation example B, how to pair data streams in a case of two or more data streams is considered. Better system performance can be achieved through pairing between a plurality of data streams and different port sets.

For ease of description, in implementation example B, the first data stream is denoted as $l_0$, and the second data stream is denoted as $l_1$, Similarly, the channel information (for example, the third channel information, the fourth channel information, or the fifth channel information) corresponding to the first port set is denoted as $\mathbf{H_0}$, and the channel information (for example, the second channel information) corresponding to the second port set is denoted as $\mathbf{H_1}$. Precoding matrices (or vectors) corresponding to an $l^{th}$ data stream (or layer) are $\mathbf{W_{0,l}}$ and $\mathbf{W_{1,l}}$, where l = 0, 1, ..., L - 1, and L is a maximum number of data streams (or a maximum number of layers, or a maximum rank). If one of the port sets does not support more data streams, a corresponding precoding matrix is $\mathbf{W} = \mathbf{0}$.

For example, the $l^{th}$ data stream $\mathbf{x_l(t)}$ is jointly transmitted by using different layers of the two port sets, which may be represented as:

$$\mathbf{y_l(t)} = [\mathbf{H_0}, \mathbf{H_1}] \begin{bmatrix} \alpha_0\mathbf{W_{0,l_0}} \\ \alpha_1\mathbf{W_{1,l_1}} \end{bmatrix} \mathbf{x_l(t)} + \mathbf{n(t)}$$

$[H_0, H_1]$ may be considered as channel coefficients corresponding to the two port sets, and $\begin{bmatrix} \alpha_0\mathbf{W_{0,l_0}} \\ \alpha_1\mathbf{W_{1,l_1}} \end{bmatrix}$ represents joint precoding of the two port sets. The weighting coefficient may be obtained by using a conventional method. For example, a 1st column of a matrix $\mathbf{V} = [\mathbf{v_0}, \mathbf{v_1}]$ may be obtained through singular value decomposition $[\mathbf{H_0W_{0,l_0}}, \mathbf{H_1W_{1,l_1}}]$

= $\mathbf{U} \times \Lambda \times \mathbf{V^H}$ corresponding to $[H_0W_{0,l0}, H_1W_{1,l1}]$, that is, $\alpha = \mathbf{v_0}$.

In implementation example B, better system performance can be achieved through pairing of different streams of different port sets. For example, in an implementation example shown in FIG. 7b, data is transmitted by using two streams. A 1st data stream is jointly transmitted by using a strongest stream of the first port set and a weak stream of the second port set, and a 2nd data stream is jointly transmitted by using a weak stream of the first port set and a strongest stream of the second port set. In this way, good transmission performance is achieved for both data streams, ultimately improving overall performance.

In a possible implementation of implementation example B, the method further includes: The terminal device receives indication information indicating the first data stream and the second data stream. Specifically, the terminal device may further receive the indication information indicating the first data stream and the second data stream, so that the terminal device can correctly receive and demodulate the first data stream and the second data stream based on the indication information. In addition, better system performance can be achieved through pairing of different port sets in different data streams. For example, the first data stream is jointly transmitted by using a strong stream of the first port set and a weak stream of the second port set, and the second data stream is jointly transmitted by using a weak stream of the first port set and a strong stream of the second port set. In this way, good transmission performance is achieved for both data streams, ultimately improving overall performance.

It should be noted that in implementation example B, the terminal device may receive the indication information in a plurality of manners. For example, the network device may add, to the configuration information of the first reference signal, the indication information indicating the first data stream and the second data stream. For another example, in the foregoing implementation example 1, in a process in which the terminal device receives the indication information indicating the first port set and/or the second port set, the terminal device may further receive the indication information indicating the first data stream and the second data stream.

In an implementation example, when a rank index is 2 (or a number of reported streams is 2), a corresponding pairing manner is: $(l_0, l_1) = (0, 1)$, indicating that a 1st stream of the first port set is paired with a 1st stream of the second port set, and a 2nd stream of the first port set is paired with a 2nd stream in the second port set; or $(l_0, l_1) = (1, 0)$, indicating that a 1st stream of the first port set is paired with a 2nd stream of the second port set, and a 2nd stream of the first port set is paired with a 1st stream of the second port set.

Similarly, when a rank index is 4 (or a number of reported streams is 4), a corresponding pairing manner is: $(l_0, l_1, l_2, l_3) = (0, 1, 2, 3)$, indicating that a 1st stream of the first port set is paired with a 1st stream of the second port set, a 2nd stream of the first port set is paired with a 2nd stream in the second port set, a 3rd stream of the first port set is paired with a 3rd stream of the second port set, and a 4th stream of the first port set is paired with a 4th stream of the second port set. Similarly, the corresponding configuration manner may alternatively be $(l_0, l_1, l_2, l_3) = (3, 1, 2, 0)$, $(l_0, l_1, l_2, l_3) = (3, 2, 1, 0)$, $(l_0, l_1, l_2, l_3) = (3, 0, 2, 1)$, $(l_0, l_1, l_2, l_3) = (0, 2, 1, 3)$, or the like.

In a possible implementation, for different rank indexes (or numbers of streams), a plurality of different pairing manners may be predefined or preconfigured. Alternatively, an index is indicated by using indication information. Alternatively, a pairing manner, for example, a CQI, is determined by using another reported value of the channel information, and different indexing manners are used for different CQI ranges.

According to the technical solution in FIG. 5, the terminal device may send the first channel information and the second channel information in step S502, where the first channel information is determined based on the first port set corresponding to the first reference signal and the second port set corresponding to the first reference signal, and the second channel information is determined based on the second port set corresponding to the first reference signal. After receiving the first channel information and the second channel information, the network device can subsequently obtain, based on the first channel information and the second channel information, the precoding information corresponding to the first port set and the second port set. In this way, the terminal device sends the low-dimensional channel information (that is, the first channel information and the second channel information), so that the network device can obtain the high-dimensional precoding information based on a correlation between channel information of different port sets. This reduces the overheads in the channel measurement process, improving resource utilization and reducing power consumption of the terminal device.

It should be noted that in a beam-based communication scenario, the network device may send a plurality of analog beams or a plurality of digital beams, and each analog beam or digital beam corresponds to a plurality of ports. For example, the network device includes a transceiver of a hybrid beamforming (hybrid beamforming, HBF) architecture. The network device may select directions of the plurality of analog beams, and deliver, by using different analog beams, reference signals for channel measurement. For the terminal device, a process in which the network device selects the analog beams is referred to as beam training or beam sweeping. In each of the plurality of analog beams, each analog beam may send a reference signal.

For example, as shown in FIG. 8, on different time domain resources, the network device may separately send, by using N (N is an integer greater than or equal to 2) beams, N (or N parts of or N groups of) CSI-RSs denoted as a CSI-RS #0, a CSI-RS #1, ..., and a CSI-RS #N-1. Correspondingly, the terminal device may separately feed back PMIs for the N beams, which are denoted as a PMI #0, a PMI #1, ..., and a PMI #N-1.

In an implementation process of a conventional solution, for each of the N CSI-RSs, the terminal device needs to feed back a complete PMI, so that the network device obtains, based on the N PMIs, channel information corresponding to the N beams. However, in the foregoing technical solution, when the network device may send the CSI-RSs by using each of the plurality of analog beams, the terminal device sends the low-dimensional channel information (that is, the first channel information and the second channel information), so that the network device can obtain the high-dimensional precoding information based on the correlation between the channel information of different port sets. Therefore, a gain of reducing the overheads can be obtained in channel measurement processes corresponding to the reference signals sent by the plurality of analog beams.

For ease of understanding the foregoing technical solution, the following uses the foregoing implementation example 1 as an example to describe the technical solution shown in FIG. 5 with reference to a communication process shown in FIG. 9. It should be understood that in FIG. 9, step S902 is an implementation example of step S501, and step S905 is an implementation example of step S502. In addition, the other steps in FIG. 9 may be performed or may not be performed (for example, step S907 is not necessarily performed), and a sequence of the steps in FIG. 9 may be changed (for example, an execution sequence of step S901 and step S902 may be changed, and an execution sequence of step S902 and step S903 may be changed).

S901: The terminal device sends an uplink signal to the network device.

In step S901, the terminal device may send one or more uplink signals, for example, one or more uplink reference signals, for example, SRSs. Correspondingly, the network device receives the uplink reference signal, and obtains uplink channel information.

Before this, the network device may further send configuration information of the uplink reference signal to the terminal device.

The configuration information of the uplink reference signal may include information related to a reference signal port group, for example, a number S of groups, where a number of ports in each group is $P_{SRS,s}$, s = 0, 1, ..., S - 1. Optionally, the numbers of ports in the port groups may be the same, for example, $P_{SRS}$.

Additionally/Alternatively, the configuration information of the uplink reference signal may include information related to a reference signal resource group, for example, a number S of reference signal resource groups, where a number of reference signal resources and/or a number of ports in each group are/is $P_{SRS,s}$, s = 0, 1, ..., S - 1. Optionally, total numbers of ports in the resource groups are the same, for example, $P_{SRS}$. Unless otherwise specified, the following describes embodiments based on the reference signal port group (or the port group). The same method can be applied to a reference resource group scenario.

It should be understood that for the configuration information of the uplink reference signal, refer to the descriptions of step S401. Details are not described herein again.

Specifically, a group #s may correspond to one analog beam of the network device. A principle of channel estimation by the network device based on a reference signal may be abstracted as the following formula:

$$y_{\#s} = F_{\#s}H_{UL}x_{SRS,s} + n_{\#s}$$

$y_{\#s}$ is a signal received by the network device (a dimension is $P_{TRX} \times P_{SRs,s}$, where $P_{TRX}$ is a number of digital channels). $H_{UL}$ is a channel (a dimension is $P_{BS,AE} \times P_{SRS,s}$, where $P_{BS,AE}$ is a number of antenna elements of the network device). $F_{\#s}$ is a weight corresponding to a receive beam of the network device (for example, a weight matrix of the analog beam, whose dimension is $P_{TRX} \times P_{BS,AE}$; for another example, a hybrid analog digital weight matrix, whose dimension is $P_{Port} \times P_{BS,AE}$, where $P_{Port}$ is a number of digital ports). $x_{SRS,s}$ is a signal sent by a transmit side (a dimension is $P_{SRS,s} \times 1$). $n_{\#s}$ is noise (a dimension is $P_{SRS,s} \times 1$). It is assumed that uplink and downlink channels are reciprocal, that is, a channel estimated by the network device by using the uplink reference signal may be used for a downlink channel, that is,

$H_{UL}^T F_{\#s}^T \cong H_{DL} F_{\#s}^T$. The network device estimates $F_{\#s}H_{UL}$ by using the reference signal. For ease of description,

$H_{DL} \cong H_{SRS\#s}^T = H_{UL}^T F_{\#s}^T$. Alternatively, a transpose is omitted: $H_{DL} \cong H_{SRS\#s} = H_{UL}^T F_{\#s}^T$.

In the following, a channel (or a channel coefficient) obtained by using the uplink reference signal is referred to as a channel of a first port set. It should be understood that in another implementation (for example, the foregoing implementation example 2 and implementation example 3), the channel information may be obtained by using downlink reference information.

S902: The network device sends a downlink signal.

Specifically, in step S902, the network device may send N (or N parts of or N groups of) downlink reference signals by using N analog beams. For example, the downlink reference signals may include a downlink signal #0 in step S902(0), a downlink signal #1 in step S902(1), ..., and a downlink signal #N-1 in step S902(N-1) in the figure. Generally, the downlink signal may be a downlink reference signal, for example, a CSI-RS. The downlink signal and the downlink reference signal in the following may be universal.

Before this, the network device may further send configuration information to the terminal device, including configuration information of the downlink reference signal and channel information reporting (or measurement) configuration information.

The configuration information of the downlink reference signal may include information related to a reference signal port group, for example, a number K of groups, where a number of ports in each group is $P_{CSI-RS,k}$, k = 0, 1, ... , K - 1. In a case, the numbers of ports in the port groups are the same, for example, $P_{CSI-RS}$.

Additionally/Alternatively, the configuration information of the downlink reference signal may include information related to a reference signal resource group, for example, a number K of reference signal resource groups, where a number of reference signal resources and/or a number of ports in each group are/is $P_{CSI-RS,k}$, k = 0, 1, ... , K - 1. In a case, total numbers of ports in the resource groups are the same, for example, $P_{CSI-RS}$. Unless otherwise specified, the following describes embodiments based on the reference signal port group (or the port group). The same method can be applied to a reference resource group scenario.

The channel information reporting configuration information may include reported content and numbers. For example, the configuration information includes a number M of measured channel information groups, a number P of reported channel information groups, and a PMI configuration corresponding to each information group, for example, a parameter related to PMI reporting.

In addition, the configuration information of the reference signal and/or the channel information reporting configuration information may further include a sending manner of the reference signal and/or a relationship between a reference signal and channel information (for details, refer to S904).

It should be understood that for other configuration information related to the reference signal and channel information reporting, refer to the descriptions of step S301. Details are not described herein again.

In an implementation, different reference signal port groups or different reference signal resource groups perform sending by using a time division method, that is, perform sending on different time domain resources (that is, slots or OFDM symbols). The time division method can facilitate sending of a plurality of reference signals based on different analog beams in an HBF architecture, to implement channel information measurement.

In an implementation, different reference signal port groups or different reference signal resource groups perform sending on different frequency domain resources (that is, component carriers, resource blocks, or different subcarriers). For example, a first antenna group is used to perform sending based on a first analog beam; and a second antenna group is used to perform sending based on a second analog beam. This frequency division manner is used by the network device to quickly scan channel information.

Optionally, port groups or resource groups of K downlink reference signals are associated with port groups or resource groups corresponding to S uplink reference signals. For example, based on an ascending or descending relationship of port group indexes, the port groups of the K downlink reference signals are associated with the port groups of the S uplink reference signals at a time, and/or the resource groups of the K downlink reference signals are associated with the resource groups of the S uplink reference signals at a time. For another example, information about a port group or resource group of an uplink reference signal associated with a port group or resource group of each downlink reference signal is configured in the port group or resource group of the downlink reference signal. For another example, K=S.

For another example, K<S. In this case, an unassociated port group or resource group of an uplink reference signal is not associated with a port group or resource group of any downlink reference signal.

For another example, K>S. In this case, an unassociated port group or resource group of a downlink reference signal is not associated with a port group or resource group of any uplink reference signal.

In an implementation, that an uplink reference signal is associated with a downlink reference signal (that is, a port group or a resource group) may mean that the uplink reference signal and the downlink reference signal correspond to entirely or partially same channels. For another example, associated reference signals are sent (downlink) or received (uplink) by a same analog beam. "Association" may alternatively be another term, for example, correspondence, correlation, and reciprocity.

Specifically, a group #k may correspond to one analog beam of the network device. A principle of channel estimation by the network device based on a reference signal may be abstracted as the following formula:

$$\mathbf{y}_{\#k} = \mathbf{H}_{DL}\mathbf{G}_{\#k}\mathbf{x}_{CSI-RS,k} + \mathbf{n}_{\#k}$$

$\mathbf{y}_{\#k}$ is a signal received by the UE (a dimension is $P_{RX} \times P_{CSI-RS,k}$, where $P_{RX}$ is a number of receive channels of the UE, and $P_{CSI-RS,k}$ represents a number of CSI-RS ports). $\mathbf{H}_{DL}$ is a channel (a dimension is $P_{RX} \times P_{TRX}$, where $P_{TRX}$ is a number of digital channels of the network device). $\mathbf{G}_{\#k}$ is a weight corresponding to a transmit beam of the network device (for example, a weight matrix of the analog beam and/or a digital beam, whose dimension is $P_{BS,AE} \times P_{CSI-RS,k}$, where AE is an antenna element (antenna element)). $\mathbf{x_{CSI-RS,k}}$ is a signal sent by the transmit side (a dimension is $P_{SRS,k} \times 1$). $\mathbf{n\#_k}$ is noise (a dimension is $P_{CSI-RS,k} \times 1$). The network device estimates $\mathbf{H_{DL}G\#_k}$ by using the reference signal. For ease of description, $\mathbf{H_{CSI-RS\#k}} = \mathbf{H_{DL}G_{\#k}}$.

For a system with transceiver reciprocity, a downlink channel and an uplink channel have a strong correlation. For example, for channels of a same port group (or a same port set) in a case of a high signal-to-noise ratio,

$$\mathbf{H_{CSI-RS\#k}} = \mathbf{H_{SRS\#k}^T} \text{, or } \mathbf{H_{CSI-RS\#k}} \approx \mathbf{H_{SRS\#k}^T} .$$

S903: The network device sends indication information indicating the first port set and/or a second port set (for ease of reference below, the "indication information indicating the first port set and/or the second port set" is denoted as target information). For example, the target information indicates at least one of Q first port sets, Q first port resource groups (that is, resource groups corresponding to the first port set), and Q first port resources (that is, resources corresponding to the first port set).

For simplicity, the following uses the port set for description, and the port set may alternatively be the resource group or the resource.

Optionally, the Q first port sets are obtained based on S uplink reference signals. In other words, the network device determines the Q first port sets based on the S received uplink reference signals. In a case, one SRS port group (or resource group) is used to obtain (uplink) channel information of all digital ports in one analog beam. If the network device and the terminal device have specific consistency (or uplink and downlink channels have reciprocity), downlink channel information in a same analog beam may be obtained based on uplink channel information measured by one SRS port group. However, in practice, due to a limitation of a terminal capability (for example, transmit power or a bandwidth) and the like, the downlink channel information obtained in this manner is incomplete. For example, channel information of only a part of ports (that is, channel information corresponding to the first port set) can be used, and channel information of the other ports cannot be used due to an excessively low signal-to-noise ratio. In other words, due to existence of noise, the network device may be able to effectively use only a part of $\mathbf{F_{\#s}H_{UL}}$ (for example, a part of ports, referred to as the first port set). Therefore, the CSI-RS and the fed-back channel information need to be further used to achieve better transmission performance. Alternatively, the S uplink reference signals may be used to obtain more channel information. For details, refer to S904. Details are not described herein again.

Optionally, the Q first port sets are obtained based on S downlink reference signals. In other words, the network device determines the Q first port sets based on the S received downlink reference signals. In a case, as described in the foregoing implementation example 2 and implementation example 3, the S downlink reference signals are sent in one or more previous CSI measurement processes.

In an implementation, S>Q.

In an implementation, S=Q.

S904: The terminal device measures the downlink reference signal.

Specifically, after receiving the downlink reference signal in step S902, the terminal device obtains M groups of channel coefficients based on the reference signal and the channel information reporting configuration information, and then determines the fed-back channel information to be fed back based on the M groups of channel coefficients and/or the target information in S903. The fed-back channel information includes at least one of the following: channel information of one or more beams (also referred to as channel information of one or more port sets) and a combination coefficient.

The following describes in detail how to obtain the M groups of channel coefficients.

Manner 1: K reference signal port groups may be used to obtain M=K groups of channel coefficients (or channel responses). For example, each reference signal port group corresponds to one analog beam, and the K groups may be used to obtain channel coefficients (or channel responses) of K analog beams.

Manner 2: K reference signal port groups may be used to obtain M>K groups of channel information. For example, the K reference signal port groups may be used to obtain channel coefficients (or channel responses) of the K port groups, which are denoted as $\mathbf{A_0}, \mathbf{A_1}, \dots, \mathbf{A_{K-1}}$. A channel coefficient on a subcarrier is used as an example. In this case, a dimension corresponding to $A_k = H_{CSI-RS\#k}$ is $P_{RX} \times P_{CSI-RS,k}$, where $P_{RX}$ is a number of receive antenna ports of the UE. If numbers of CSI-RS ports in the K port groups are the same, for example, $P_{CSI-RS,k} = P_{CSI-RS}$, M second channel coefficients $\mathbf{H_m} = \sum_{k=0}^{K-1} \boldsymbol{\varphi_{m,k}} \mathbf{A_k}$ may be obtained based on the channel information of the K port groups and the target information $\boldsymbol{\varphi_m} = [\varphi_{m,0}, \varphi_{m,1}, \dots, \varphi_{m,K-1}]$.

It should be understood that for an HBF architecture (or an analog beamforming architecture), in Manner 2, more channel information may be obtained by sending fewer reference signals. For example, the network device may use K groups of orthogonal analog weights for sending of one reference signal port group, to obtain channel information corresponding to K analog ports. The terminal device may obtain channel information of M>K new analog beams through weighting between analog port channels (that is, $\varphi_m$ may be equivalent to one analog beam). In this manner, the terminal device measures encrypted beam channel information. It should be noted that this method may also be applied to a digital beamforming architecture.

In an implementation, at least one of parameters $\varphi_m$, m = 0, 1, ... , M - 1 is obtained based on the configuration information of the network device.

In an implementation, M=K.

In an implementation, M>K.

In an implementation, M>Q.

In an implementation, M=Q.

In an implementation, M<K. In other words, only a part of channel information is fed back. For example, the channel information is fed back only when channel quality exceeds a specific threshold. The threshold may be configured or preset by the network device.

In an implementation, M<Q. In other words, only a part of channel information is fed back. For example, the channel information is fed back only when channel quality exceeds a specific threshold. The threshold may be configured or preset by the network device.

Further, an m$^{th}$ group of channel coefficients corresponds to one port set (denoted as a target port set), and the target port set includes the first port set. Further, channel information (that is, a PMI, a CQI, an RI, and the like) corresponding to one subset is fed back, and this subset is referred to as the second port set. In an implementation, the second port set and the first port set are entirely different, that is, an intersection set is empty.

Additionally/Alternatively, when an m$^{th}$ group of channel coefficients is fed back, the channel information further includes combination coefficient information. The combination coefficient indicates a weighting coefficient between a channel corresponding to the first port set and a channel corresponding to the second port set.

Similar to the association relationship between the K downlink reference signals and the S uplink reference signals in S902, the M groups of channel coefficients herein may also be associated with or correspond to channel information obtained based on K uplink reference signals in S901. Details are not described herein again.

Further, it should be understood that there is an association relationship (or a correspondence) between the reference signal (regardless of whether the reference signal is a downlink signal or an uplink signal) in S901, the target information in S903, and the combination coefficient in the channel information in S904. This correspondence is used to ensure that the combination between the first port set and the second port set is aligned on a network device side and a terminal device side, to achieve good transmission performance. If the correspondence does not exist, understandings of the network device and the UE may not be aligned, causing a performance loss.

S905: The terminal device sends the channel information to the network device, including one or more of the following: an index or indexes of one or more resources, an index or indexes of one or more resource groups, an index or indexes of one or more ports, P (groups of) channel quality indicators (channel quality indicators, CQIs), P pieces (groups) of reference signal received quality (Reference Signal Received Power, RSRP), P (groups of) precoding matrix indicators (Precoding matrix indicators, PMIs), and C combination coefficient matrices (or C combination coefficient vectors or C combination coefficients). It should be understood that in the foregoing one or more, the C combination coefficient matrices may be content included in the first channel information described above, and the other information may be content included in the second channel information described above.

In an implementation, the terminal device reports P groups of channel information, where P=M or K.

In an implementation, the terminal device reports P groups of channel information, where P<K.

In an implementation, the terminal device reports P groups of channel information, where P<M.

In an implementation, the terminal device reports P groups of channel information, where C=P, C=M, or C=K.

In an implementation, the terminal device reports P groups of channel information, where C<P.

In an implementation, the terminal device reports P groups of channel information, where C<M.

It should be understood that P (or P groups) herein may alternatively be represented by one piece of channel information.

Further, the terminal reports information about P weighting parameters. The P weighting parameters correspond to the P groups of channel information, that is, the P weighting parameters respectively correspond to P second channel coefficients, and these second channel coefficients correspond to the P groups of channel information. Specifically, the information about the P weighting parameters may be an index set $\{i_0, i_1, ..., i_{P-1}\}$ of the weighting parameters, where $i_p = 0, 1, 2, ..., M - 1$ are indexes of the second channel coefficients in M (or K) pieces of channel information, and p = 0, 1, ..., P - 1.

It should be understood that C (or C groups) herein may alternatively be represented by one piece of channel information.

It should be understood that a part of terminals may support the method in this embodiment, but a part of terminals do not. In this case, whether the terminal device supports any reference signal receiving or channel information feedback manner in the foregoing process may be determined by using capability information reported by the terminal device. The network device may determine, based on the capability information reported by the terminal device, whether to configure the foregoing implementation.

S906: The network device determines precoding information (for example, a precoding matrix) based on the combination coefficient, PMI information, and the like.

S907: The network device sends a downlink signal (or downlink data, downlink information, a downlink message, or the like) based on the precoding information.

It should be noted that in step S906, the network device may send the downlink signal (or the downlink data, the downlink information, the downlink message, or the like) by using one or more data streams. For a specific implementation process, refer to the descriptions of FIG. 5 and related implementation examples (for example, the example shown in FIG. 7a or FIG. 7b). Details are not described herein again.

According to the technical solution shown in FIG. 9, feedback of combination coefficients between a plurality of port groups helps the network device calculate precoding vectors based on a plurality of pieces of low-dimensional port group-level channel information, and achieves high-dimensional precoding effects based on a plurality of low-dimensional precoding vectors and the combination coefficients. This can reduce overheads in a channel measurement process, improving resource utilization and reducing power consumption of the terminal device.

In some implementations, power allocation between streams can be implemented through pairing of precoding matrices between port groups (pairing of precoding vectors corresponding to different streams), improving performance.

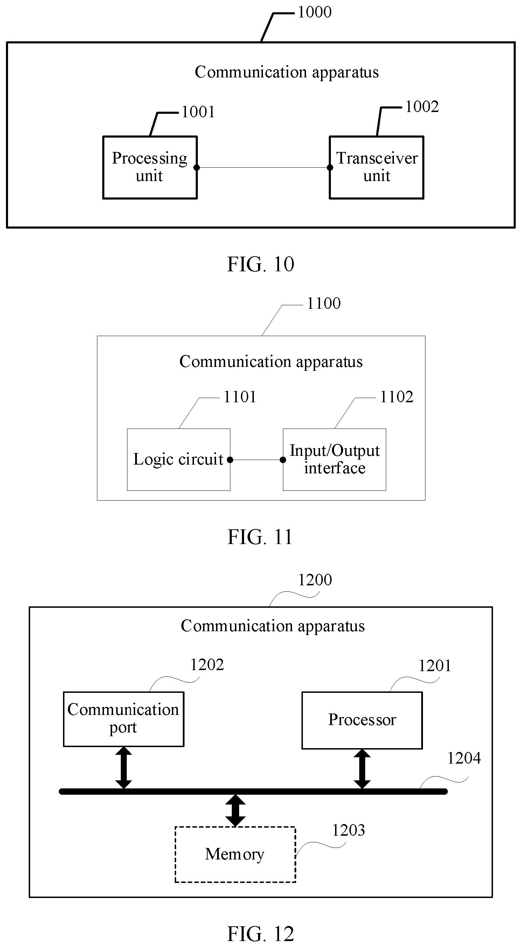

Refer to FIG. 10. An embodiment of this application provides a communication apparatus 1000. The communication apparatus 1000 can implement a function of the terminal device (or the network device) in the foregoing method embodiments, and therefore can also achieve beneficial effects of the foregoing method embodiments. In this embodiment of this application, the communication apparatus 1000 may be the terminal device (or the network device), or may be an integrated circuit, an element, or the like inside the terminal device (or the network device), for example, a chip. In the following embodiments, an example in which the communication apparatus 1000 is the terminal device or the network device is used for description.

In a possible implementation, when the apparatus 1000 is configured to perform the method performed by the terminal device in the foregoing embodiments, the apparatus 1000 includes a processing unit 1001 and a transceiver unit 1002. The transceiver unit 1002 is configured to receive a first reference signal, where the first reference signal corresponds to a first port set and a second port set, and each port set includes one or more ports. The processing unit 1001 is configured to determine first channel information and second channel information, and the transceiver unit 1002 is further configured to send the first channel information and the second channel information, where the first channel information is determined based on the first port set corresponding to the first reference signal and the second port set corresponding to the first reference signal, and the second channel information is determined based on the second port set corresponding to the first reference signal.

In a possible implementation, the transceiver unit 1002 is further configured to send a second reference signal, where the second reference signal is used to determine third channel information and/or the first port set, and the third channel information is determined based on the first port set corresponding to the second reference signal.

In a possible implementation, the transceiver unit 1002 is further configured to receive indication information indicating the first port set and/or the second port set.

In a possible implementation, the transceiver unit 1002 is further configured to receive a third reference signal, where the third reference signal is used to determine fourth channel information and/or the first port set, and the fourth channel information is determined based on the first port set corresponding to the third reference signal. The transceiver unit 1002 is further configured to send the fourth channel information and/or indication information indicating the first port set.

In a possible implementation, the transceiver unit 1002 is further configured to send fifth channel information, where the fifth channel information is determined based on the first port set corresponding to the first reference signal.

In a possible implementation, the first channel information corresponds to a combination coefficient matrix, a combination coefficient vector, or a combination coefficient (or a weighting coefficient or a coefficient) between channel information of the first port set and channel information of the second port set.

In a possible implementation, the transceiver unit 1002 is further configured to send an index of the first port set and/or an index of the second port set.

In a possible implementation, the transceiver unit 1002 is further configured to send capability information, where the capability information indicates that sending of the first channel information is supported.

In a possible implementation, the first channel information and the second channel information are used to determine precoding information, and the precoding information satisfies:

$$\mathbf{W} = \alpha \times \begin{bmatrix} \mathbf{W_0} \\ \mathbf{W_1} \end{bmatrix}; \text{ or } \mathbf{W} = \alpha \otimes \begin{bmatrix} \mathbf{W_0} \\ \mathbf{W_1} \end{bmatrix}$$

$\mathbf{W}$ represents the precoding information. $\alpha$ represents the first channel information. $\otimes$ represents a Kronecker product (Kronecker Product). $\mathbf{W_0}$ represents precoding information corresponding to channel information determined based on the first port set. $\mathbf{W_1}$ represents the second channel information.

Optionally, $\alpha$ satisfies:

$$\boldsymbol{\alpha} = [\alpha_0, \alpha_1]^{\mathrm{T}}$$

$\alpha_0$ represents a coefficient of the first port set. $\alpha_1$ represents a coefficient of the second port set. $[\alpha_0, \alpha_1]^{\mathrm{T}}$ represents a transpose of a matrix $[\alpha_0, \alpha_1]$. Correspondingly, the precoding information W satisfies:

$$\mathbf{W} = \begin{bmatrix} \alpha_0 \mathbf{W_0} \\ \alpha_1 \mathbf{W_1} \end{bmatrix}$$

In a possible implementation, $\mathbf{W_0}$ and $\mathbf{W_1}$ respectively represent precoding information corresponding to the channel information determined based on the first port set and precoding information corresponding to the second channel information during transmission of a same data stream.

In a possible implementation, $\mathbf{W_0}$ represents precoding information corresponding to the channel information determined based on the first port set during transmission of a first data stream, and $\mathbf{W_1}$ represents precoding information corresponding to the second channel information during transmission of a second data stream.

In a possible implementation, the transceiver unit 1002 is further configured to receive indication information indicating the first data stream and the second data stream.

In a possible implementation, when the apparatus 1000 is configured to perform the method performed by the network device in the foregoing embodiments, the apparatus 1000 includes a processing unit 1001 and a transceiver unit 1002. The processing unit is configured to determine a first reference signal, and the transceiver unit 1002 is configured to send the first reference signal, where the first reference signal corresponds to a first port set and a second port set, and each port set includes one or more ports. The transceiver unit 1002 is further configured to receive first channel information and second channel information, where the first channel information is determined based on the first port set corresponding to the first reference signal and the second port set corresponding to the first reference signal, and the second channel information is determined based on the second port set corresponding to the first reference signal.

In a possible implementation, the transceiver unit 1002 is further configured to receive a second reference signal, where the second reference signal is used to determine third channel information and/or the first port set, and the third channel information is determined based on the first port set corresponding to the second reference signal.

In a possible implementation, the transceiver unit 1002 is further configured to send indication information indicating the first port set and/or the second port set.

In a possible implementation, the transceiver unit 1002 is further configured to send a third reference signal, where the third reference signal is used to determine fourth channel information and/or the first port set, and the fourth channel information is determined based on the first port set corresponding to the third reference signal. The network device receives the fourth channel information and/or the first port set.

In a possible implementation, the transceiver unit 1002 is further configured to send fifth channel information, where the fifth channel information is determined based on the first port set corresponding to the first reference signal.

In a possible implementation, the first channel information corresponds to a combination coefficient matrix, a combination coefficient vector, or a combination coefficient (or a weighting coefficient or a coefficient) between channel information of the first port set and channel information of the second port set.

In a possible implementation, the transceiver unit 1002 is further configured to receive an index of the first port set and/or an index of the second port set.

In a possible implementation, the transceiver unit 1002 is further configured to receive capability information, where the capability information indicates that sending of the first channel information is supported.

In a possible implementation, the first channel information and the second channel information are used to determine precoding information, and the precoding information satisfies:

$$\mathbf{W} = \boldsymbol{\alpha} \times \begin{bmatrix} \mathbf{W_0} \\ \mathbf{W_1} \end{bmatrix}; \text{ or } \mathbf{W} = \boldsymbol{\alpha} \otimes \begin{bmatrix} \mathbf{W_0} \\ \mathbf{W_1} \end{bmatrix}$$

W represents the precoding information. $\alpha$ represents the first channel information. $\otimes$ represents a Kronecker product (Kronecker Product). $\mathbf{W_0}$ represents precoding information corresponding to channel information determined based on the first port set. $\mathbf{W_1}$ represents the second channel information.

Optionally, $\alpha$ satisfies:

$$\boldsymbol{\alpha} = [\alpha_0, \alpha_1]^{\mathrm{T}}$$

$\alpha_0$ represents a coefficient of the first port set. $\alpha_1$ represents a coefficient of the second port set. $[\alpha_0, \alpha_1]^{\mathrm{T}}$ represents a transpose of a matrix $[\alpha_0, \alpha_1]$.

In a possible implementation, and $\mathbf{W_1}$ respectively represent precoding information corresponding to the channel information determined based on the first port set and precoding information corresponding to the second channel information during transmission of a same data stream.

In a possible implementation, $\mathbf{W_0}$ represents precoding information corresponding to the channel information determined based on the first port set during transmission of a first data stream, and $\mathbf{W_1}$ represents precoding information corresponding to the second channel information during transmission of a second data stream.

In a possible implementation, the transceiver unit 1002 is further configured to send indication information indicating the first data stream and the second data stream.

It should be noted that for details of content such as an information execution process of the unit of the communication apparatus 1000, refer to the descriptions in the foregoing method embodiments of this application. Details are not described herein again.

FIG. 11 is a diagram of another structure of a communication apparatus 1100 according to this application. The communication apparatus 1100 includes a logic circuit 1101 and an input/output interface 1102. The communication apparatus 1100 may be a chip or an integrated circuit.

The transceiver unit 1002 shown in FIG. 10 may be a communication interface. The communication interface may be the input/output interface 1102 in FIG. 11, and the input/output interface 1102 may include an input interface and an output interface. Alternatively, the communication interface may be a transceiver circuit, and the transceiver circuit may include an input interface circuit and an output interface circuit.

Optionally, the input/output interface 1102 is configured to receive a first reference signal, where the first reference signal corresponds to a first port set and a second port set, and each port set includes one or more ports. The logic circuit 1101 is configured to determine first channel information and second channel information, and the input/output interface 1102 is further configured to send the first channel information and the second channel information, where the first channel information is determined based on the first port set corresponding to the first reference signal and the second port set corresponding to the first reference signal, and the second channel information is determined based on the second port set corresponding to the first reference signal. The logic circuit 1101 and the input/output interface 1102 may further perform the other steps performed by the terminal device in the foregoing embodiments, and achieve corresponding beneficial effects. Details are not described herein again.

Optionally, the logic circuit 1101 is configured to determine a first reference signal, and the input/output interface 1102 is configured to send the first reference signal, where the first reference signal corresponds to a first port set and a second port set, and each port set includes one or more ports. The input/output interface 1102 is further configured to receive first channel information and second channel information, where the first channel information is determined based on the first port set corresponding to the first reference signal and the second port set corresponding to the first reference signal, and the second channel information is determined based on the second port set corresponding to the first reference signal. The logic circuit 1101 and the input/output interface 1102 may further perform the other steps performed by the network device in the foregoing embodiments, and achieve corresponding beneficial effects. Details are not described herein again.

In a possible implementation, the processing unit 1001 shown in FIG. 10 may be the logic circuit 1101 in FIG. 11.

Optionally, the logic circuit 1101 may be a processing apparatus, and a part or all of functions of the processing apparatus may be implemented by software. A part or all of the functions of the processing apparatus may be implemented by software.

Optionally, the processing apparatus may include a memory and a processor. The memory is configured to store a computer program. The processor reads and executes the computer program stored in the memory, to perform corresponding processing and/or steps in any method embodiment.

Optionally, the processing apparatus may include only a processor. A memory configured to store a computer program is located outside the processing apparatus. The processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field programmable gate arrays, FPGAs), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable logic device (programmable logic device, PLD), or another integrated chip, or any combination of the foregoing chips or processors.

FIG. 12 shows a communication apparatus 1200 in the foregoing embodiments according to an embodiment of this application. The communication apparatus 1200 may be specifically a communication apparatus serving as the terminal device in the foregoing embodiments. An example shown in FIG. 12 is that the terminal device is implemented by using a terminal device (or a component in a terminal device).

In a possible diagram of a logical structure of the communication apparatus 1200, the communication apparatus 1200 may include but is not limited to at least one processor 1201 and a communication port 1202.

Further, optionally, the apparatus may include at least one of a memory 1203 and a bus 1204. In this embodiment of this application, the at least one processor 1201 is configured to perform control processing on an action of the communication apparatus 1200.

In addition, the processor 1201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 1200 shown in FIG. 12 may be specifically configured to implement steps implemented by the terminal device in the foregoing method embodiments, and achieve technical effects corresponding to the terminal device. For a specific implementation of the communication apparatus shown in FIG. 12, refer to the descriptions in the foregoing method embodiments. Details are not described herein again.

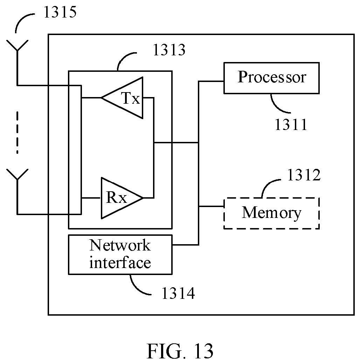

FIG. 13 is a diagram of a structure of a communication apparatus 1300 in the foregoing embodiments according to an embodiment of this application. The communication apparatus 1300 may be specifically a communication apparatus serving as the network device in the foregoing embodiments. In an example shown in FIG. 13, the network device is implemented by using a network device (or a component in a network device). For a structure of the communication apparatus, refer to the structure shown in FIG. 13.

The communication apparatus 1300 includes at least one processor 1311 and at least one network interface 1314. Further, optionally, the communication apparatus further includes at least one memory 1312, at least one transceiver 1313, and one or more antennas 1315. The processor 1311, the memory 1312, the transceiver 1313, and the network interface 1314 are connected, for example, through a bus. In this embodiment of this application, the connection may include various interfaces, transmission lines, buses, or the like. This is not limited in this embodiment. The antenna 1315 is connected to the transceiver 1313. The network interface 1314 is configured to enable the communication apparatus to communicate with another communication device through a communication link. For example, the network interface 1314 may include a network interface between the communication apparatus and a core network device, for example, an S1 interface. The network interface may include a network interface between the communication apparatus and another communication apparatus (for example, another network device or core network device), for example, an X2 interface or an Xn interface.

The processor 1311 is mainly configured to process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. The processor 1311 in FIG. 13 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1312 may exist independently, and is connected to the processor 1311. Optionally, the memory 1312 and the processor 1311 may be integrated together, for example, integrated into one chip. The memory 1312 can store program code for performing the technical solutions in embodiments of this application, and execution is controlled by the processor 1311. Various types of executed computer program code may also be considered as a driver of the processor 1311.

FIG. 13 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1313 may be configured to support receiving or sending of a radio frequency signal between the communication apparatus and a terminal, and the transceiver 1313 may be connected to the antenna 1315. The transceiver 1313 includes a transmitter machine Tx and a receiver machine Rx. Specifically, the one or more antennas 1315 may receive a radio frequency signal. The receiver machine Rx of the transceiver 1313 is configured to receive the radio frequency signal from the antenna, convert the radio frequency signal into a digital baseband signal or a digital intermediate frequency signal, and provide the digital baseband signal or the digital intermediate frequency signal for the processor 1311, so that the processor 1311 performs further processing on the digital baseband signal or the digital intermediate frequency signal, for example, performs demodulation processing and decoding processing. In addition, the transmitter machine Tx of the transceiver 1313 is further configured to receive a modulated digital baseband signal or digital intermediate frequency signal from the processor 1311, convert the modulated digital baseband signal or digital intermediate frequency signal into a radio frequency signal, and send the radio frequency signal via the one or more antennas 1315. Specifically, the receiver machine Rx may selectively perform one-level or multi-level down frequency mixing and analog-to-digital conversion on the radio frequency signal to obtain the digital baseband signal or the digital intermediate frequency signal. A sequence of the down frequency mixing and the analog-to-digital conversion is adjustable. The transmitter machine Tx may selectively perform one-level or multi-level up frequency mixing and digital-to-analog conversion on the modulated digital baseband signal or digital intermediate frequency signal to obtain the radio frequency signal. A sequence of the up frequency mixing and the digital-to-analog conversion is adjustable. The digital baseband signal and the digital intermediate frequency signal may be collectively referred to as a digital signal.

The transceiver 1313 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver machine, an input interface, a receiver circuit, or the like. The sending unit may be referred to as a transmitter machine, a transmitter, a transmitter circuit, or the like.

It should be noted that the communication apparatus 1300 shown in FIG. 13 may be specifically configured to implement steps implemented by the network device in the foregoing method embodiments, and achieve technical effects corresponding to the network device. For a specific implementation of the communication apparatus 1300 shown in FIG. 13, refer to the descriptions in the foregoing method embodiments. Details are not described herein again.

An embodiment of this application further provides a computer-readable storage medium, configured to store one or more computer-executable instructions. When the computer-executable instructions are executed by a processor, the processor performs the method according to the possible implementations of the communication apparatus (for example, the terminal device or the network device) in the foregoing embodiments.

An embodiment of this application further provides a computer program product (or referred to as a computer program). When the computer program product is executed by a processor, the processor performs the method according to the possible implementations of the communication apparatus (for example, the terminal device or the network device).

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device or the network device in the foregoing method embodiments.

An embodiment of this application further provides a communication system. An architecture of the network system includes the terminal device and the network device in any one of the foregoing embodiments.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making a contribution, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc.

**Claims**

1. A communication method, comprising:

   receiving a first reference signal, wherein the first reference signal corresponds to a first port set and a second port set, and each port set comprises one or more ports; and
   sending first channel information and second channel information, wherein the first channel information is determined based on the first port set corresponding to the first reference signal and the second port set corresponding to the first reference signal, and the second channel information is determined based on the second port set corresponding to the first reference signal.

2. The method according to claim 1, wherein before sending the first channel information and the second channel information, the method further comprises:
   sending a second reference signal, wherein the second reference signal is used to determine third channel information and/or the first port set, and the third channel information is determined based on the first port set corresponding to the second reference signal.

3. The method according to claim 1 or 2, wherein the method further comprises:
   receiving indication information indicating the first port set and/or the second port set.

4. The method according to claim 1, wherein before sending the first channel information and the second channel information, the method further comprises:

   receiving a third reference signal, wherein the third reference signal is used to determine fourth channel information and/or the first port set, and the fourth channel information is determined based on the first port set corresponding to the third reference signal; and
   sending the fourth channel information and/or indication information indicating the first port set.

5. The method according to claim 1, wherein the method further comprises:
   sending fifth channel information, wherein the fifth channel information is determined based on the first port set corresponding to the first reference signal.

6. The method according to any one of claims 1 to 5, wherein the method further comprises:
   sending an index of the first port set and/or an index of the second port set.

7. The method according to any one of claims 1 to 6, wherein the method further comprises:
   sending capability information, wherein the capability information indicates that sending of the first channel information is supported.

8. A communication method, comprising:

sending a first reference signal, wherein the first reference signal corresponds to a first port set and a second port set, and each port set comprises one or more ports; and

receiving first channel information and second channel information, wherein the first channel information is determined based on the first port set corresponding to the first reference signal and the second port set corresponding to the first reference signal, and the second channel information is determined based on the second port set corresponding to the first reference signal.

9. The method according to claim 8, wherein before receiving the first channel information and the second channel information, the method further comprises:

receiving a second reference signal, wherein the second reference signal corresponds to the first port set, the second reference signal is used to determine third channel information and/or the first port set, and the third channel information is determined based on the first port set corresponding to the second reference signal.

10. The method according to claim 8 or 9, wherein the method further comprises:
sending indication information indicating the first port set and/or the second port set.

11. The method according to claim 10, wherein before receiving the first channel information and the second channel information, the method further comprises:

sending a third reference signal, wherein the third reference signal corresponds to the first port set, the third reference signal is used to determine fourth channel information and/or the first port set, and the fourth channel information is determined based on the first port set corresponding to the third reference signal; and
receiving the fourth channel information and/or indication information indicating the first port set.

12. The method according to claim 8, wherein the method further comprises:
sending fifth channel information, wherein the fifth channel information is determined based on the first port set corresponding to the first reference signal.

13. The method according to any one of claims 8 to 12, wherein the method further comprises:
receiving an index of the first port set and/or an index of the second port set.

14. The method according to any one of claims 8 to 13, wherein the method further comprises:
receiving capability information, wherein the capability information indicates that sending of the first channel information is supported.

15. The method according to any one of claims 1 to 14, wherein the first channel information corresponds to a combination coefficient matrix, a combination coefficient vector, or a combination coefficient between channel information of the first port set and channel information of the second port set.

16. The method according to any one of claims 1 to 15, wherein the first channel information and the second channel information are used to determine precoding information, and the precoding information satisfies:

$$\mathbf{W} = \alpha \otimes \begin{bmatrix} \mathbf{W_0} \\ \mathbf{W_1} \end{bmatrix},$$

wherein
$\mathbf{W}$ represents the precoding information, $\alpha$ represents the first channel information, $\otimes$ represents a Kronecker product, $\mathbf{W_0}$ represents precoding information corresponding to channel information determined based on the first port set, and $\mathbf{W_1}$ represents precoding information corresponding to the second channel information.

17. The method according to claim 16, wherein $\alpha$ satisfies:

$$\boldsymbol{\alpha} = [\alpha_0, \alpha_1]^{\mathrm{T}},$$

wherein
$\alpha_0$ represents a coefficient of the first port set, $\alpha_1$ represents a coefficient of the second port set, and $[\alpha_0, \alpha_1]^{\mathrm{T}}$

represents a transpose of a matrix $[\alpha_0, \alpha_1]$.

18. The method according to claim 16 or 17, wherein the channel information determined based on the first port set comprises at least one of the following:

the third channel information, wherein the third channel information is determined based on the first port set corresponding to the second reference signal sent by a terminal device;
the fourth channel information, wherein the fourth channel information is determined based on the first port set corresponding to the third reference signal received by the terminal device; and
the fifth channel information, wherein the fifth channel information is determined based on the first port set corresponding to the first reference signal.

19. The method according to any one of claims 16 to 18, wherein $W_0$ and $W_1$ respectively represent precoding information corresponding to the channel information determined based on the first port set and precoding information corresponding to the second channel information during transmission of a same data stream.

20. The method according to any one of claims 16 to 18, wherein $W_0$ represents precoding information corresponding to the channel information determined based on the first port set during transmission of a first data stream, and $W_1$ represents precoding information corresponding to the second channel information during transmission of a second data stream.

21. The method according to claim 20, wherein the method further comprises:
sending or receiving indication information indicating the first data stream and the second data stream.

22. A communication apparatus, comprising a module configured to perform the method according to any one of claims 1 to 21.

23. A communication apparatus, comprising at least one processor, wherein the at least one processor is coupled to a memory, and the at least one processor is configured to perform the method according to any one of claims 1 to 21.

24. A readable storage medium, wherein the storage medium stores a computer program or instructions, and when the computer program or the instructions are executed by a communication apparatus, the communication apparatus is enabled to implement the method according to any one of claims 1 to 21.

Antenna array

Digital port 0 — Digital-to-analog converter DAC

Digital port 1 — Digital-to-analog converter DAC

Digital port 2 — Digital-to-analog converter DAC

Digital port 3 — Digital-to-analog converter DAC

FIG. 1a

Antenna array

Digital port 0 — Digital-to-analog converter DAC

Phase shifter 0

Phase shifter 1

Phase shifter 2

Phase shifter 3

Phase shifter 4

Phase shifter 5

FIG. 1b

FIG. 1c

FIG. 2

```
┌──────────┐                          ┌──────────┐
│ Terminal │                          │ Network  │
│  device  │                          │  device  │
└────┬─────┘                          └────┬─────┘
     │      S301: Configuration information │
     │◄─────────────────────────────────────│
     │                                       │
     │      S302: Downlink reference signal  │
     │◄─────────────────────────────────────│
┌────┴─────┐                                 │
│  S303:   │                                 │
│Measurement│                                │
└────┬─────┘                                 │
     │      S304: Channel information         │
     │───────────────────────────────────────►│
     │                                       │
```

FIG. 3

```
┌──────────┐                          ┌──────────┐
│ Terminal │                          │ Network  │
│  device  │                          │  device  │
└────┬─────┘                          └────┬─────┘
     │      S401: Configuration information │
     │◄─────────────────────────────────────│
     │                                       │
     │      S402: Uplink reference signal    │
     │───────────────────────────────────────►│
     │                                  ┌────┴─────┐
     │                                  │  S403:   │
     │                                  │Measurement│
     │                                  └────┬─────┘
```

FIG. 4

```
┌──────────┐                          ┌──────────┐
│ Terminal │                          │ Network  │
│  device  │                          │  device  │
└────┬─────┘                          └────┬─────┘
     │      S501: First reference signal    │
     │◄─────────────────────────────────────│
     │                                       │
     │   S502: First channel information     │
     │   and second channel information      │
     │───────────────────────────────────────►│
     │                                       │
```

FIG. 5

Terminal device

Network device

A: Second reference signal

S501: First reference signal

S502: First channel information
and second channel information

FIG. 6a

Terminal device

Network device

B: Third reference signal

C: Fourth channel information and/or indication
information indicating a first port set

S501: First reference signal

S502: First channel information
and second channel information

FIG. 6b

Terminal device

Network device

S501: First reference signal

S502: First channel information
and second channel information

D: Fifth channel information

FIG. 6c

**Precoding $W_0$**

**Precoding $W_1$**

FIG. 7a

FIG. 7b

Network device — CSI-RS #0 — CSI-RS #1 — CSI-RS #N−1

Terminal device — PMI #0 — PMI #1 — PMI #N−1 — t

FIG. 8

Terminal device — Network device

S901: Uplink signal

S902(0): Downlink signal #0

S902(1): Downlink signal #1

...

S902(N−1): Downlink signal #N−1

S902

S903: Indication information indicating a first port set and/or a second port set

S904: Measurement

S905: Channel information

S906: Determine precoding information

S907: Send a downlink signal based on the precoding information

FIG. 9

—1000

Communication apparatus

—1001

Processing unit

—1002

Transceiver unit

FIG. 10

—1100

Communication apparatus

—1101

Logic circuit

—1102

Input/Output interface

FIG. 11

1200

Communication apparatus

1202

Communication port

1201

Processor

1204

1203

Memory

FIG. 12

FIG. 13

# EP 4 749 943 A1

## INTERNATIONAL SEARCH REPORT

| International application No. |
| --- |
| **PCT/CN2024/116526** |

**A. CLASSIFICATION OF SUBJECT MATTER**

H04B 7/0456(2017.01)i

According to International Patent Classification (IPC) or to both national classification and IPC

**B. FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

3GPP, CNKI, IEEE, CNTXT, DWPI, ENTXT, ENTXTC, VEN: 参考信号, 端口, 集合, 组, 系数, 信道, 信息, 组合系数, 合并系数, CSI, RS, port, group, set, Kronecker, PMI

**C. DOCUMENTS CONSIDERED TO BE RELEVANT**

| Category* | Citation of document, with indication, where appropriate, of the relevant passages | Relevant to claim No. |
| --- | --- | --- |
| X | CN 116743217 A (HUAWEI TECHNOLOGIES CO., LTD.) 12 September 2023 (2023-09-12) <br> description, paragraphs [0313]-[0595] and [0640]-[0700] | 1-24 |
| A | CN 115694758 A (HUAWEI TECHNOLOGIES CO., LTD.) 03 February 2023 (2023-02-03) <br> entire document | 1-24 |
| A | CN 113271133 A (DATANG MOBILE COMMUNICATIONS EQUIPMENT CO., LTD.) 17 August 2021 (2021-08-17) <br> entire document | 1-24 |
| A | WO 2018171727 A1 (HUAWEI TECHNOLOGIES CO., LTD.) 27 September 2018 (2018-09-27) <br> entire document | 1-24 |
| A | WO 2022032424 A1 (QUALCOMM INC.) 17 February 2022 (2022-02-17) <br> entire document | 1-24 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 December 2024** | **23 December 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2024/116526** |

| Patent document cited in search report | | | Publication date (day/month/year) | Patent family member(s) | | | Publication date (day/month/year) |
|---|---|---|---|---|---|---|---|
| CN | 116743217 | A | 12 September 2023 | WO | 2023165458 | A1 | 07 September 2023 |
| CN | 115694758 | A | 03 February 2023 | WO | 2023011088 | A1 | 09 February 2023 |
| | | | | EP | 4366186 | A1 | 08 May 2024 |
| | | | | US | 2024172025 | A1 | 23 May 2024 |
| CN | 113271133 | A | 17 August 2021 | WO | 2021159851 | A1 | 19 August 2021 |
| | | | | KR | 20220137099 | A | 11 October 2021 |
| | | | | EP | 4106215 | A1 | 21 December 2022 |
| | | | | US | 2024187059 | A1 | 06 June 2024 |
| | | | | JP | 2023513909 | A | 04 April 2023 |
| WO | 2018171727 | A1 | 27 September 2018 | US | 2020044803 | A1 | 06 February 2020 |
| | | | | EP | 3588794 | A1 | 01 January 2020 |
| | | | | CN | 108631847 | A | 09 October 2018 |
| WO | 2022032424 | A1 | 17 February 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311205664